(19) Europäisches Patentamt
European Patent Office
Office européen des brevets

(11) **EP 4 013 055 A1**

(12) **EUROPEAN PATENT APPLICATION**
published in accordance with Art. 153(4) EPC

(43) Date of publication:
**15.06.2022 Bulletin 2022/24**

(51) International Patent Classification (IPC):
***H04N 19/13*** *(2014.01)*

(21) Application number: **20861874.4**

(52) Cooperative Patent Classification (CPC):
**H04N 19/13**

(22) Date of filing: **04.09.2020**

(86) International application number:
**PCT/JP2020/033572**

(87) International publication number:
**WO 2021/045187 (11.03.2021 Gazette 2021/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.09.2019 US 201962896785 P**

(71) Applicant: **Sony Group Corporation Tokyo 108-0075 (JP)**

(72) Inventor: **TSUKUBA, Takeshi Tokyo 108-0075 (JP)**

(74) Representative: **D Young & Co LLP 120 Holborn London EC1N 2DY (GB)**

(54) **IMAGE PROCESSING DEVICE AND METHOD**

(57)     The present disclosure relates to an information processing device and method capable of curbing an increase in the load of coding processing/decoding processing.

A fixed context variable is set for a first bin of a bin string of secondary transform control information, which is control information about secondary transformation, and each bin of the secondary transform control information is arithmetically coded with reference to the set fixed context variable. The present disclosure can be applied to, for example, an image processing device, an image coding device, an image decoding device, a transmitting device, a receiving device, a transmitting/receiving device, an information processing device, an imaging device, a reproduction device, an electronic apparatus, an image processing method, an information processing method, and the like.

Fig. 2

# Description

[Technical Field]

The present disclosure relates to an image processing device and method, and particularly to an image processing device and method capable of curbing an increase in the load of coding processing/decoding processing.

[Background Art]

Conventionally, a coding method of deriving a predicted residual of a moving image and performing coefficient transformation, quantization and coding has been proposed (for example, NPL 1). In VVC WD6 described in NPL 1, there is a coding tool for performing low frequency secondary transformation (LFST) on a transform coefficient after primary transformation to further improve energy compaction. An ST identifier st_idx (also referred to as lfnst_idx) is available as mode information related to this low-frequency secondary transformation.

When this ST identifier lfnst_idx is coded, this ST identifier lfnst_idx is binarized first, and arithmetic coding is performed with reference to a context variable ctx corresponding to each binIdx of a bin sequence (bins) obtained by the binarization. For example, the context variable ctx is allocated to a bin with binIdx=0 in this bin sequence according to a tree type treType and an MTS identifier mts_idx.

[Citation List]

[Non Patent Literature]

[NPL 1]
Benjamin Bross, Jianle Chen, Shan Liu, "Versatile Video Coding (Draft 6)," JVET-O2001-vE, m49908, Joint Video Experts Team (JVET) of ITU-T SG 16 WP 3 and ISO/IEC JTC 1/SC 29/WG 11 15th Meeting: Gothenburg, SE, 3-12 July 2019

[Summary]

[Technical Problem]

However, since LFSNT is applied only when tu_mts_idx == 0 (DCT2xDCT2), the condition of "tu_mts_idx == 0" is always true. Therefore, the branch of "tu_mts_idx == 0" is redundant, which may increase the load of coding processing/decoding processing.

The present disclosure is made in view of such a situation and can curb an increase in the load of coding processing/decoding processing.

[Solution to Problem]

An image processing device of one aspect of the present technology is an image processing device including a coding unit configured to set a fixed context variable for a first bin of a bin string of secondary transform control information, which is control information about secondary transformation, and to arithmetically code each bin of the secondary transformation control information with reference to the set fixed context variable.

An image processing method of one aspect of the present technology is an image processing method including setting a fixed context variable for a first bin of a bin string of secondary transform control information, which is control information about secondary transformation, and arithmetically coding each bin of the secondary transform control information with reference to the set fixed context variable.

An image processing device of another aspect of the present technology is an image processing device including a decoding unit configured to perform arithmetic decoding with reference to a fixed context variable set for a first bin of a bin string of secondary transform control information, which is control information about secondary transformation.

An image processing method of another aspect of the present technology is an image processing method including performing arithmetic decoding with reference to a fixed context variable set for a first bin of a bin string of secondary transform control information, which is control information about secondary transformation.

In the image processing device and method of one aspect of the present technology, a fixed context variable is set for the first bin of the bin string of the secondary transform control information, which is control information about secondary transformation, and each bin of the secondary transform control information is arithmetically coded with reference to the set fixed context variable.

In the image processing device and method of the other aspect of the present technology, arithmetic decoding is performed with reference to a fixed context variable set for the first bin of the bin string of the secondary transform control information, which is the control information about the secondary transformation.

[Brief Description of Drawings]

[Fig. 1] Fig. 1 is a diagram illustrating an ST identifier.
[Fig. 2] Fig. 2 is a diagram illustrating an example of a method of allocating a context variable ctx corresponding to each binIdx of a bin string of the ST identifier.
[Fig. 3] Fig. 3 is a block diagram showing an example of major components of a coding device.

[Fig. 4] Fig. 4 is a flowchart showing an example of a flow of coding processing.

[Fig. 5] Fig. 5 is a block diagram showing an example of major components of a decoding device.

[Fig. 6] Fig. 6 is a flowchart showing an example of a flow of decoding processing.

[Fig. 7] Fig. 7 is a block diagram showing an example of major components of an image coding device.

[Fig. 8] Fig. 8 is a flowchart showing an example of a flow of image coding processing.

[Fig. 9] Fig. 9 is a block diagram showing an example of major components of an image decoding device.

[Fig. 10] Fig. 10 is a flowchart showing an example of a flow of image decoding processing.

[Fig. 11] Fig. 11 is a block diagram showing an example of major components of a computer.

[Description of Embodiments]

Hereinafter, modes for carrying out the present disclosure (hereinafter referred to as embodiments) will be described. The description will be made in the following order.

1. Coding of ST identifier
2. First embodiment (coding device)
3. Second embodiment (decoding device)
4. Third embodiment (image decoding device)
5. Fourth embodiment (image coding device)
6. Supplement

<1. Encoding of ST identifier>

<Literature and the like supporting technical details and technical terms>

The scope disclosed in the present technology includes not only details described in embodiments but also details described in the following non-patent literature and the like known at the time of filing the application, details of other literature referred to in the following non-patent literature, and the like.

[NPL 1] (Aforementioned)
[NPL 2]
Jianle Chen, Yan Ye, Seung Hwan Kim, "Algorithm description for Versatile Video Coding and Test Model 6 (VTM 6)", JVET-O2002-v2, m49914, Joint Video Experts Team (JVET) of ITU-T SG 16 WP 3 and ISO/IEC JTC 1/SC 29/WG 11 15th Meeting: Gothenburg, SE, 3-12 July 2019
[NPL 3]
Recommendation ITU-T H.264 (04/2017) "Advanced video coding for generic audiovisual services", April 2017
[NPL 4]
Recommendation ITU-T H.265 (02/18) "High efficiency video coding", February 2018

That is, details described in the aforementioned non-patent literature are also grounds for determination of support requirements. For example, even though Quad-Tree Block Structure and Quad Tree Plus Binary Tree (QTBT) Block Structure described in the aforementioned non-patent literature are not directly described in examples, they are assumed to be included in the scope of the disclosure of the present technology and to satisfy support requirements of the claims. In addition, even though technical terms such as parsing, syntax, and semantics are not directly described in examples, they are assumed to be included in the scope of disclosure of the present technology and to satisfy support requirements of the claims.

Further, in the present specification, a "block" (not a block indicating a processing unit) used in description as a partial area of an image (picture) or a processing unit indicates an arbitrary partial area in a picture unless otherwise specified and the size, shape, characteristics, and the like thereof are not limited. For example, a "block" may be assumed to include any partial area (processing unit) such as a transform block (TB), a transform unit (TU), a prediction block (PB), a prediction unit (PU), a smallest coding unit (SCU), a coding unit (CU), a largest coding unit (LCU), a coding tree block (CTB), a coding tree unit (CTU), a subblock, a macroblock, a tile, or a slice described in the above-mentioned non-patent literature.

In addition, in designation of the size of such a block, not only may the block size be directly designated but also the block size may be indirectly designated. For example, the block size may be designated using identification information for identifying the size. Further, the block size may be designated, for example, by a ratio or a difference with respect to the size of a reference block (for example, an LCU, an SCU, or the like). When information for designating a block size as a syntax element or the like is transmitted, for example, information for indirectly designating the size as described above may be used as the information. By doing so, the amount of the information can be reduced, and thus coding efficiency may be improved. Further, designation of a block size also includes designation of a range of the block size (for example, designation of an allowable block size range, and the like).

Further, in the present specification, coding includes not only all processing of transforming an image into a bit stream but also a part thereof. For example, coding may include not only processing including prediction processing, orthogonal transformation, quantization, arithmetic coding, and the like but also processing that collectively refers to quantization and arithmetic coding, processing including prediction processing, quantization, and arithmetic coding, and the like. Similarly, decoding includes not only all processing of transforming a bit stream into an image but also a part thereof. For example, decoding may include not only processing including inverse arithmetic decoding, inverse quantization, inverse orthogonal transformation, prediction processing, and the like but also processing including inverse arithmetic decoding and inverse quantization, processing including inverse arithmetic decoding, inverse quantization, and prediction processing, and the like.

<ST identifier>

In VVC WD6 described in NPL 1, there is a coding tool for performing low frequency secondary transformation (LFST) on a transform coefficient after primary transformation to further improve energy compaction. As mode information regarding this low frequency secondary transformation (control information regarding secondary transformation), there is an ST identifier st_idx (also referred to as lfnst_idx) indicating the type of secondary transformation. Coding of this ST identifier is performed through the following procedure.

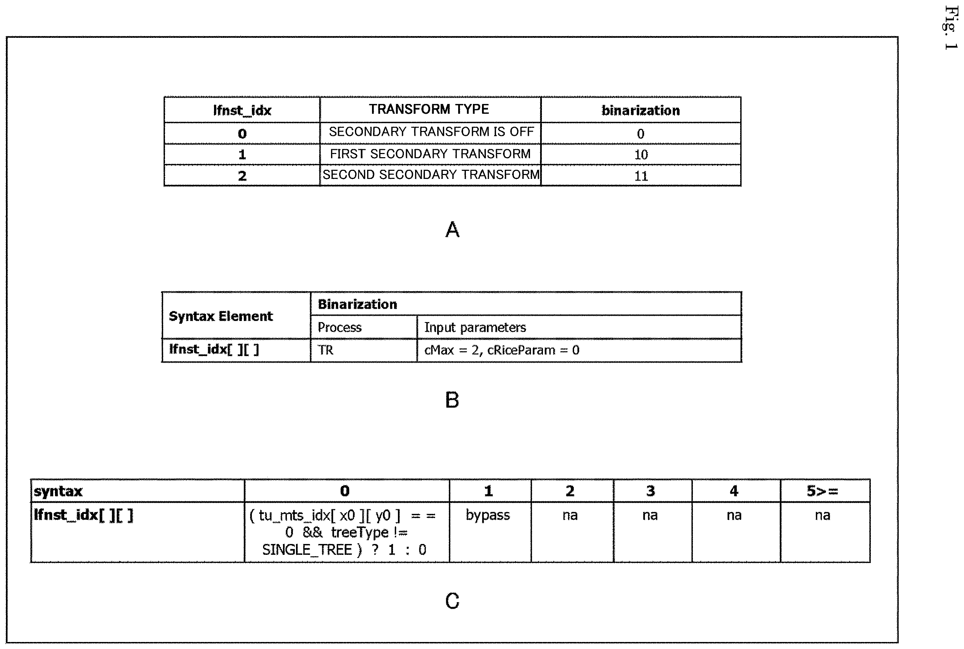

First, the ST identifier lfnst_idx is binarized to obtain a bin string bins. The ST identifier lfnst_idx takes a value as shown in the table of A of Fig. 1, and each value indicates a transform type as shown in the table. Further, a bin string (binarization) as shown in the table is obtained according to binarization of the ST identifier lfnst_idx.

The ST identifier lfnst_idx is binarized by a Truncated Unary (TU) code to obtain a bin string bins. As shown in the table shown in B of Fig. 1, this TU code is equivalent to a Truncated Rice (TR) code in which a rice parameter cRiceParam=0.

Next, arithmetic coding is performed with reference to a context variable ctx corresponding to each binIdx of the obtained bin string bins. An index that identifies the context variable ctx is also referred to as ctxInc (or ctxIdx).

Specifically, the context variable ctx is allocated to a bin with binIdx=0 in the bin string according to a tree type treType and an MTS identifier mts_idx, as shown in the table of C of Fig. 1. In the example in this table, ctxInc corresponding to binIdx=0 is derived as the value ctxInc = (mts_idx == 0 && treeType! = SINGLE_TREE). Bypass coding is applied to binIdx=1 of the bin string bins.

Each bin in the bin string bins of the ST identifier lfnst_idx can also be construed as a flag corresponding to a transform type. In that case, the value of the bin with binIdx=0 corresponds to a flag (0: Yes, 1: No) indicating whether secondary transformation is available and the value of the bin with binIdx=1 corresponds to a flag (0: Yes, 1: No) indicating whether first secondary transformation is available.

At the time of decoding, each bin is arithmetically decoded with reference to the context variable ctx set as described above. Then, the bin string is multivalued to obtain the ST identifier lfnst_idx.

However, since LFSNT is applied only when tu_mts_idx == 0 (DCT2xDCT2), the condition of "tu_mts_idx == 0" is always true in the table shown in C of Fig. 1. Therefore, the branch of "tu_mts_idx == 0" is redundant, which may increase the load of coding processing/decoding processing. To reduce implementation cost, it is necessary to reduce the number of context variables and simplify derivation of context variables while maintaining coding efficiency.

<Allocation of fixed context>

Therefore, a fixed context variable is set for the first bin of a bin string of secondary transform control information, which is control information regarding secondary transformation.

For example, in image processing (particularly, image coding), a fixed context variable is set for the first bin of a bin string of the secondary transform control information, which is control information regarding secondary transformation, and each bin of the secondary transform control information is arithmetically coded with reference to the set fixed context variable.

For example, an image processing device (particularly, an image coding device that codes an image) may include a coding unit that sets a fixed context variable for the first bin of a bin string of the secondary transform control information, which is control information regarding secondary transformation, and arithmetically codes each bin of the secondary transform control information with reference to the set fixed context variable.

By doing so, it is possible to simplify derivation of a context variable of the ST identifier while maintaining coding efficiency. In addition, it is possible to reduce a memory size for holding the context variable of the ST identifier while maintaining coding efficiency. That is, it is possible to curb an increase in the load of coding processing.

Further, in image processing (decoding of coded data of an image), for example, arithmetic decoding is performed with reference to a fixed context variable set for the first bin of a bin string of the secondary transform control information, which is control information regarding secondary transformation.

For example, an image processing device (particularly, an image decoding device that decodes coded data of an image) may include a decoding unit that performs arithmetic decoding with reference to a fixed context variable set for the first bin of a bin string of the secondary transform control information, which is control information regarding secondary transformation.

By doing so, it is possible to simplify derivation of a context variable of the ST identifier while maintaining coding efficiency. In addition, it is possible to reduce a memory size for holding the context variable of the ST identifier while maintaining coding efficiency. That is, it is possible to curb an increase in the load of decoding processing.

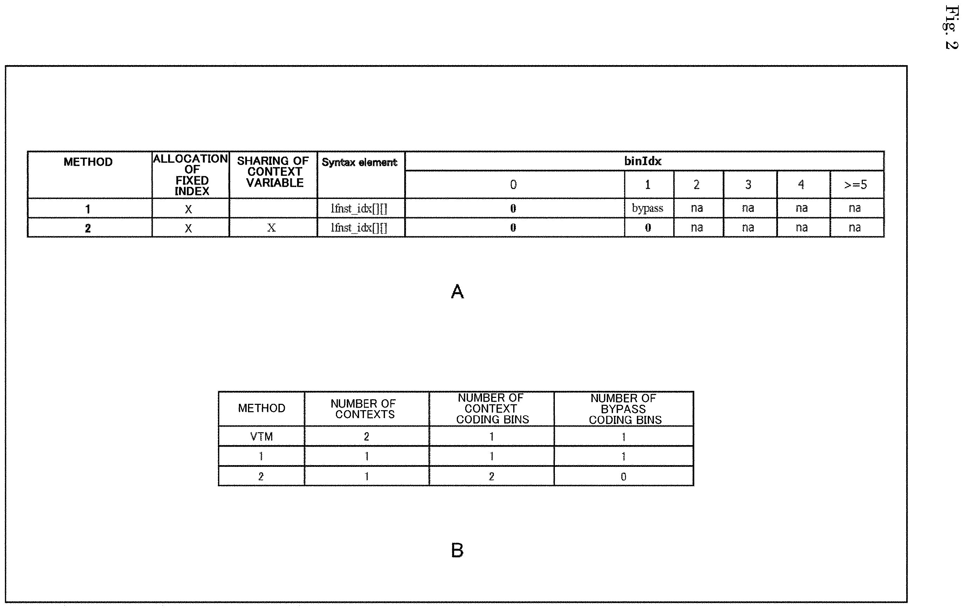

For example, as shown in the second row from the top of the table shown in A of Fig. 2 (Method 1), "0" may be allocated as a context variable ctx to a bin (first bin) with binIdx=0 in a bin string. That is, "0" may be set as the context variable ctx for the first bin of the bin string of the ST identifier and arithmetic coding may be performed with reference to the value. In other words, arithmetic decoding may be performed with reference to "0" set as the context variable ctx for the first bin of the bin string of the ST identifier. By doing so, in derivation of a context variable in the first bin of the bin string of the ST identifier, branching processing with respect to selection of the context variable according to treeType (and tu_mts_idx == 0) can be omitted. Accordingly, it is possible to curb an increase in the load of the coding processing/decoding processing. Further, as shown in the table shown in B of Fig. 2, Method 1 can reduce the number of contexts as compared to the case of VTM. Therefore, a memory size for holding the context variable of the ST identifier can be reduced.

Further, as shown in (Method 1) of the table shown in A of Fig. 2, a bypass flag may be allocated to a bin (second bin) with binIdx = 1 in the bin string. That is, the bypass flag (bypass) may be set for the first bin of the bin string of the ST identifier and arithmetic coding may be performed on the basis of the bypass flag. In other words, arithmetic decoding may be performed on the basis of the bypass flag set for the first bin of the bin string of the ST identifier.

Further, as shown in the third row from the top of the table shown in A of Fig. 2 (Method 2), for example, a common context variable ctx may be allocated to a bin (first bin) with binIdx=0 and a bin (second bin) with binIdx=1. In the case of the table shown in A of Fig. 2, "0" is allocated to both the bin (first bin) with binIdx=0 and the bin (second bin) with binIdx=1 in the bin string. That is, a common context variable ctx (for example, "0") may be set for the first and second bins of the bin string of the ST identifier and arithmetic coding of each bin may be performed with reference to the value. In other words, arithmetic decoding of each bin may be performed with reference to the common context variable ctx (for example, "0") set for the first and second bins of the bin string of the ST identifier. By doing so, as shown in the table shown in B of Fig. 2, Method 2 can reduce the number of bypass coding bins while maintaining the number of contexts as compared to the case of Method 1. Therefore, the code amount of the ST identifier can be reduced.

<2. First embodiment>

<Coding device>

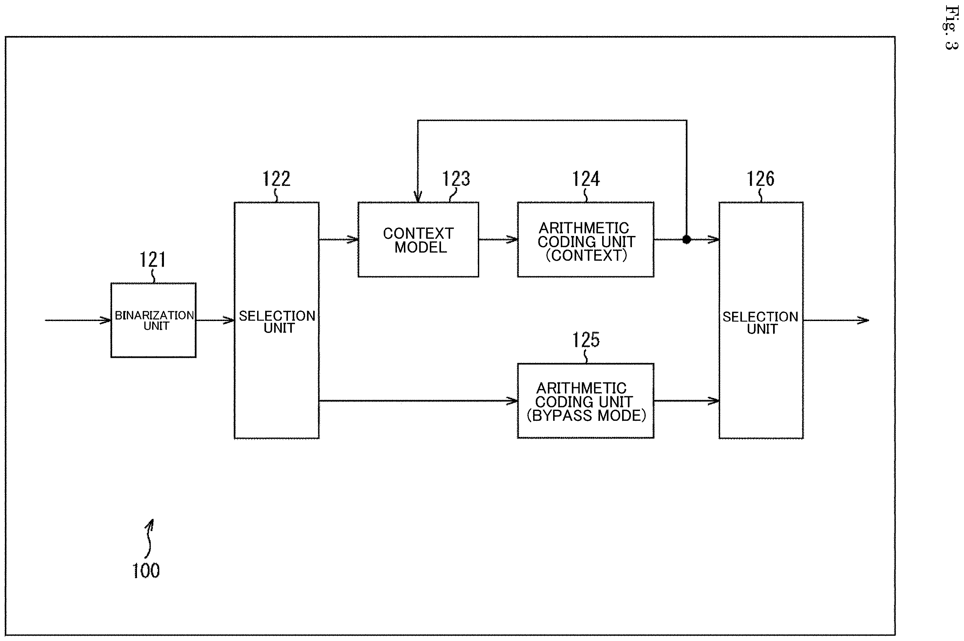

The present technology described in <1. Coding of ST identifier> can be applied to an arbitrary device. Application examples of the present technology will be described below. Fig. 3 is a block diagram illustrating an example of a configuration of a coding device that is an aspect of an information processing device to which the present technology is applied. The coding device 100 shown in Fig. 3 is a device that codes the ST identifier lfnst_idx. The coding device 100 performs coding using, for example, Context-based Adaptive Binary Arithmetic Code (CABAC).

Meanwhile, Fig. 3 illustrates major parts such as processing units and data flows, but processing units and data flows are not limited to those illustrated in Fig. 3. That is, processing units that are not illustrated in Fig. 3 as blocks and processing and data flows that are not illustrated in Fig. 3 as arrows and the like may be present in the coding device 100.

As shown in Fig. 3, the coding device 100 includes a binarization unit 121, a selection unit 122, a context model 123, an arithmetic coding unit 124, an arithmetic coding unit 125, and a selection unit 126.

The binarization unit 121 acquires a syntax element value supplied to the coding device 100 and binarizes it by a method defined for each syntax element to generate a binarized bit stream. The binarization unit 121 supplies the binarized bit stream to the selection unit 122.

The selection unit 122 acquires the binarized bit stream supplied from the binarization unit 121 and flag information isBypass. The selection unit 122 selects a supply destination of the binarized bit stream on the basis of the value of isBypass. For example, when isBypass=0, the selection unit 122 determines that a normal mode has been set and supplies the binarized bit stream to the context model 123. Further, when isBypass=1, the selection unit 122 determines that a bypass mode has been set and supplies the binarized bit stream to the arithmetic coding unit 125.

The context model 123 dynamically switches context models to be applied according to a coding target and a surrounding situation. For example, the context model 123 holds context variables ctx, and when the binarized bit stream is acquired from the selection unit 122, reads a context variable ctx corresponding to each bin position (binIdx) of a bin string defined for each syntax element. The context model 123 supplies the binarized bit stream and the read context variable ctx to the arithmetic coding unit 124.

When the arithmetic coding unit 124 acquires the binarized bit stream and the context variable ctx supplied from the context model 123, the arithmetic coding unit 124 arithmetically codes the value of the bin in binIdx of the binarized bit stream with reference to the probability state of the context variable ctx in a normal mode of CABAC (performs context coding). The arithmetic coding unit 124 supplies coded data generated through context coding to the selection unit 126. Further, the arithmetic coding unit 124 supplies the context variable ctx after context coding processing to the context model 123 such that the context variable ctx is held therein.

The arithmetic coding unit 125 arithmetically codes the binarized bit stream supplied from the selection unit 122 in a bypass mode of CABAC (performs bypass coding). The arithmetic coding unit 125 supplies coded data generated through bypass coding to the selection unit 126.

The selection unit 126 acquires the flag information isBypass and selects coded data to be output on the basis of the value of the isBypass. For example, when isBypass=0, the selection unit 126 determines that the normal mode has been set, acquires the coded data supplied from the arithmetic coding unit 124, and outputs the coded data to outside of the CABAC 102 (coding device 100). Further, when isBypass=1, the selection unit 126 determines that the bypass mode has been set, acquires the coded data supplied from the arithmetic coding unit 125, and outputs the coded data to the outside of the coding device 100.

Meanwhile, the processing units (binarization unit 121 to the selection unit 126) have arbitrary configurations. For example, each processing unit may be configured as a logic circuit for realizing the aforementioned processing. In addition, each processing unit may include, for example, a central processing unit (CPU), a read only memory (ROM), a random access memory (RAM), and the like and execute a program using these components to realize the aforementioned processing. It goes without saying that each processing unit may have both the aforementioned configurations, realize parts of the aforementioned processing according to a logic circuit, and realize the other part of the processing by executing a program. The processing units may have independent configurations, for example, some processing units may realize parts of the aforementioned processing according to a logic circuit, some other processing units may realize the aforementioned processing by executing a program, and some other processing units may realize the aforementioned processing according to both a logic circuit and execution of a program.

In the coding device 100, the present technology described in <1. Coding of ST identifier> is applied. That is, the binarization unit 121 binarizes the secondary transform control information (ST identifier lfnst_idx) to generate a bin string. The selection unit 122 sets a fixed context variable ctx (for example, "0") for the first bin of the bin string. The arithmetic coding unit 124 performs arithmetic coding in the normal mode of CABAC with reference to the fixed context variable ctx (for example, "0").

By doing so, the coding device 100 can simplify derivation of a context variable of the ST identifier while maintaining coding efficiency. Further, the coding device 100 can reduce a memory size for holding context variables of the ST identifier while maintaining coding efficiency. That is, the coding device 100 can curb an increase in the load of coding processing.

At that time, the selection unit 122 may set a bypass flag for the second bin of the bin string (Method 1). In that case, the arithmetic coding unit 125 arithmetically codes the second bin in the bypass mode of CABAC.

Further, the selection unit 122 may set a context variable ctx (for example, "0") shared by the first bin for the second bin of the bin string (Method 2). In that case, the arithmetic coding unit 124 performs arithmetic coding in the normal mode of CABAC with reference to the fixed context variable ctx (for example, "0").

<Flow of coding processing>

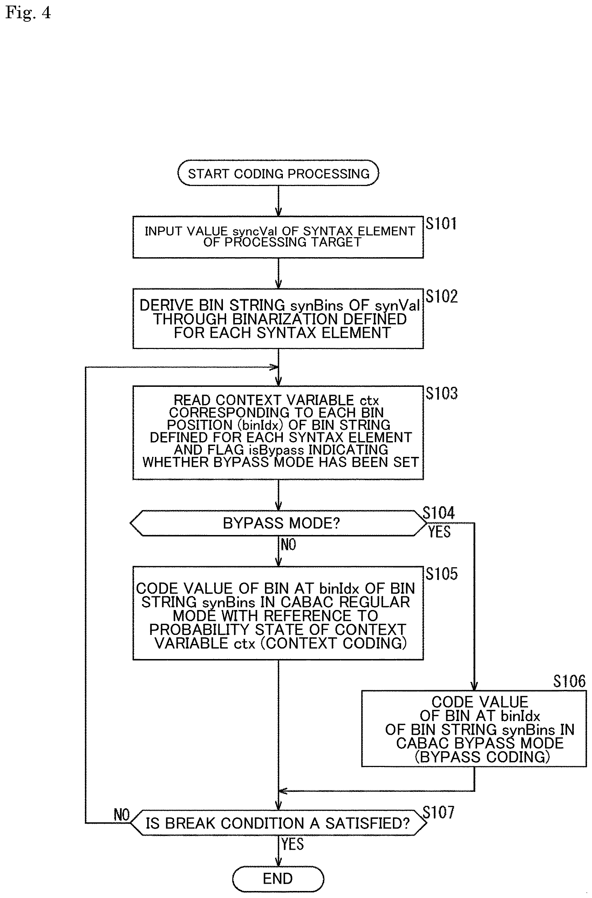

Next, an example of a flow of coding processing executed by the coding device 100 will be described with reference to the flowchart of Fig. 4.

When coding processing is started, the binarization unit 121 of the coding device 100 receives a syntax element value (syncVal) to be processed in step S101.

In step S102, the binarization unit 121 performs binarization processing defined for each syntax element to derive a bin string (synBins) of the syntax element value (syncVal).

In step S103, the selection unit 122 reads a context variable ctx corresponding to each bin position (binIdx) of the bin string defined for each syntax element and a flag isBypass indicating whether the bypass mode has been set.

In step S104, the selection unit 122 determines whether the bypass mode has been set. If isBypass=0 and it is determined that the normal mode has been set, processing proceeds to step S105.

In step S105, the arithmetic coding unit 124 performs context coding. That is, the arithmetic coding unit 124 codes the value of the bin at a bin position (binIdx) of the bin string (synBins) in the normal mode of CABAC with reference to the probability state of the context variable ctx. When processing of S105 ends, processing proceeds to step S107.

If isBypass=1 in step S104 and it is determined that the bypass mode has been set, processing proceeds to step S106.

In step S106, the arithmetic coding unit 125 performs bypass coding. That is, the arithmetic coding unit 125 codes the value of the bin at the bin position (binIdx) of the bin string (synBins) in the bypass mode of CABAC. When processing of S106 ends, processing proceeds to step S107.

In step S107, the selection unit 126 determines whether a predetermined break condition A is satisfied. The break condition A is defined on the basis of values of the bin string from binIdx=0 to binIdx=k (current position k of binIdx) and a binarization method for each syntax element.

If it is determined that the break condition A is not satisfied, processing returns to step S103, and subsequent processing is executed for the next bin position (binIdx). That is, processing of steps S103 to S107 is executed for each bin position (binIdx).

Then, if it is determined that the break condition A is satisfied in step S107, CABAC processing ends.

In such coding processing, the present technology described in <1. Coding of ST identifier> is applied. That is, the binarization unit 121 binarizes the secondary transform control information (ST identifier lfnst_idx) in step S102 to generate a bin string. In step S103, the selection unit 122 sets a fixed context variable ctx (for example, "0") for the first bin of the bin string. In step S105, the arithmetic coding unit 124 performs arithmetic coding in the normal mode of CABAC with reference to the fixed context variable ctx (for example, "0").

By doing so, the coding device 100 can simplify derivation of a context variable of the ST identifier while maintaining coding efficiency. Further, the coding device 100 can reduce a memory size for holding context variables of the ST identifier while maintaining coding efficiency. That is, the coding device 100 can curb an increase in the load of coding processing.

Further, in step S103, the selection unit 122 may set the bypass flag for the second bin of the bin string (Method 1). In that case, the arithmetic coding unit 125 arithmetically codes the second bin in the bypass mode of CABAC in step S106.

Further, in step S103, the selection unit 122 may set a context variable ctx (for example, "0") shared by the first bin for the second bin of the bin string (Method 2). In that case, the arithmetic coding unit 124 performs arithmetic coding in the normal mode of CABAC with reference to the fixed context variable ctx (for example, "0") in step S105.

<3. Second embodiment>

<Decoding device>

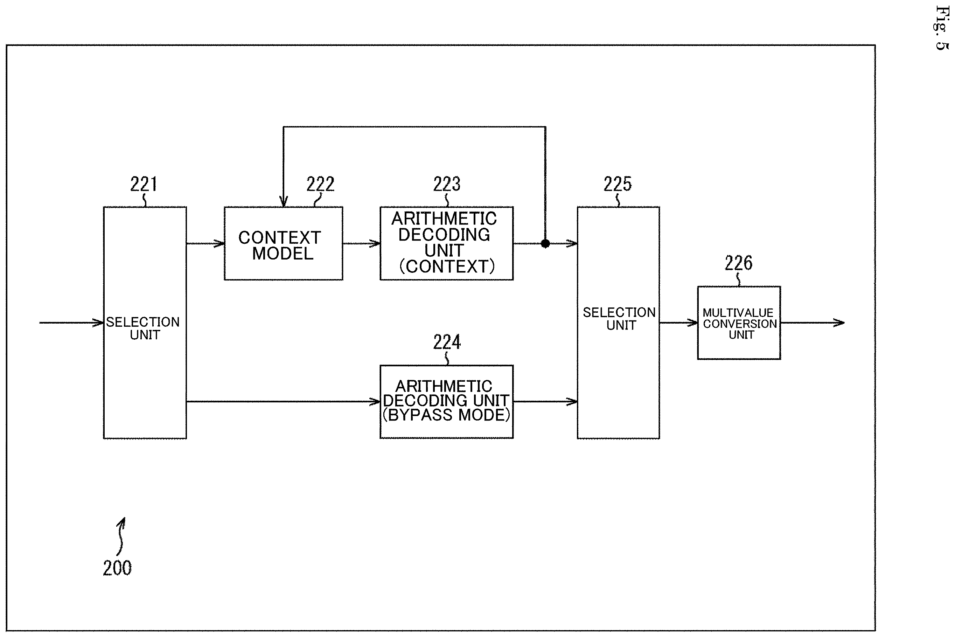

Fig. 5 is a block diagram showing an example of a configuration of a decoding device that is one aspect to which the present technology is applied. The decoding device 200 shown in Fig. 5 is a device that decodes coded data of the ST identifier lfnst_idx. The decoding device 200 performs decoding using a decoding method (for example, CABAC) corresponding to the coding method of the coding device 100. For example, the decoding device 200 decodes the coded data of the ST identifier lfnst_idx generated by the coding device 100.

Meanwhile, Fig. 5 illustrates major parts such as processing units and data flows, but processing units and data flows are not limited to those illustrated in Fig. 5. That is, processing units that are not illustrated in Fig. 5 as blocks and processing and data flows that are not illustrated in Fig. 5 as arrows and the like may be present in the decoding device 200.

As shown in Fig. 5, the decoding device 200 includes a selection unit 221, a context model 222, an arithmetic decoding unit 223, an arithmetic decoding unit 224, a selection unit 225, and a multivalue conversion unit 226.

The selection unit 221 acquires coded data and flag information isBypass input to the decoding device 200. The selection unit 221 selects a supply destination of the coded data on the basis of the value of isBypass. For example, when isBypass=0, the selection unit 221 determines that the normal mode has been set and supplies the coded data to the context model 222. Further, when isBypass=1, the selection unit 221 determines that the bypass mode has been set and supplies a binarized bit stream to the arithmetic decoding unit 224.

The context model 222 dynamically switches context models to be applied according to a decoding target and the surrounding situation. For example, the context model 222 holds context variables ctx, and when the coded data is acquired from the selection unit 221, reads a context variable ctx corresponding to each bin position (binIdx) of a bin string defined for each syntax element. The context model 222 supplies the coded data and the read context variable ctx to the arithmetic decoding unit 223.

When the arithmetic decoding unit 223 acquires the coded data and the context variable ctx supplied from the context model 222, the arithmetic decoding unit 223 arithmetically decodes the value of the bin at binIdx of the binarized bit stream in the normal mode of CABAC with reference to the probability state of the context variable ctx (performs context decoding). The arithmetic decoding unit 223 supplies the binarized bit stream generated through context decoding to the selection unit 225. Further, the arithmetic decoding unit 223 supplies the context variable ctx after context decoding processing to the context model 222 such that the context variable ctx is held therein.

The arithmetic decoding unit 224 arithmetically decodes the coded data supplied from the selection unit 221 in the bypass mode of CABAC (performs bypass decoding). The arithmetic decoding unit 224 supplies the binarized bit stream generated through bypass decoding to the selection unit 225.

The selection unit 225 acquires the flag information isBypass and selects a binarized bit stream to be supplied to the multivalue conversion unit 226 on the basis of the value of isBypass. For example, when isBypass=0, the selection unit 225 determines that the normal mode has been set, acquires the binarized bit stream supplied from the arithmetic decoding unit 223, and supplies the binarized bit stream to the multivalue conversion unit 226. Further, when isBypass=1, the selection unit 225 determines that the bypass mode has been set, acquires the binarized bit stream supplied from the arithmetic decoding unit 224, and supplies the binarized bit stream to the multivalue conversion unit 226.

The multivalue conversion unit 226 acquires the binarized bit stream supplied from the selection unit 225 and converts the binarized bit stream into a multivalued bit stream through a method defined for each syntax element to generate a syntax element value. The multivalue conversion unit 226 outputs the syntax element value to the outside of the decoding device 200.

Meanwhile, the processing units (the decoding unit 221 to the multivalue conversion unit 226) have arbitrary configurations. For example, each processing unit may be configured as a logic circuit for realizing the aforementioned processing. Further, each processing unit may include, for example, a CPU, a ROM, a RAM, and the like and execute a program using these components to realize the aforementioned processing. It goes without saying that each processing unit may have both the aforementioned configurations, realize parts of the aforementioned processing according to a logic circuit, and realize the other part of the processing by executing a program. The processing units may have independent configurations: for example, some processing units may realize parts of the aforementioned processing according to a logic circuit, some other processing units may realize the aforementioned processing by executing a program, and some other processing units may realize the aforementioned processing according to both a logic circuit and execution of a program.

In this decoding device 200, the present technology described in <1. Coding of ST identifier> is applied. That is, the arithmetic decoding unit 223 performs arithmetic decoding in the normal node of CABAC with reference to a fixed context variable ctx (for example, "0") set for the first bin of the bin string of the secondary transform control information (ST identifier lfnst_idx).

By doing so, the decoding device 200 can simplify derivation of a context variable of the ST identifier while maintaining coding efficiency. Further, the decoding device 200 can reduce a memory size for holding context variables of the ST identifier while maintaining coding efficiency. That is, the decoding device 200 can curb an increase in the load of decoding processing.

At that time, the arithmetic decoding unit 224 may arithmetically decode the second bin of the bin string in the bypass mode of CABAC on the basis of a bypass flag set for the second bin.

Further, the arithmetic decoding unit 223 may perform arithmetic decoding in the normal mode of CABAC with reference to a context variable ctx (for example, "0") shared by the first bin set for the second bin of the bin string.

<Flow of decoding processing>

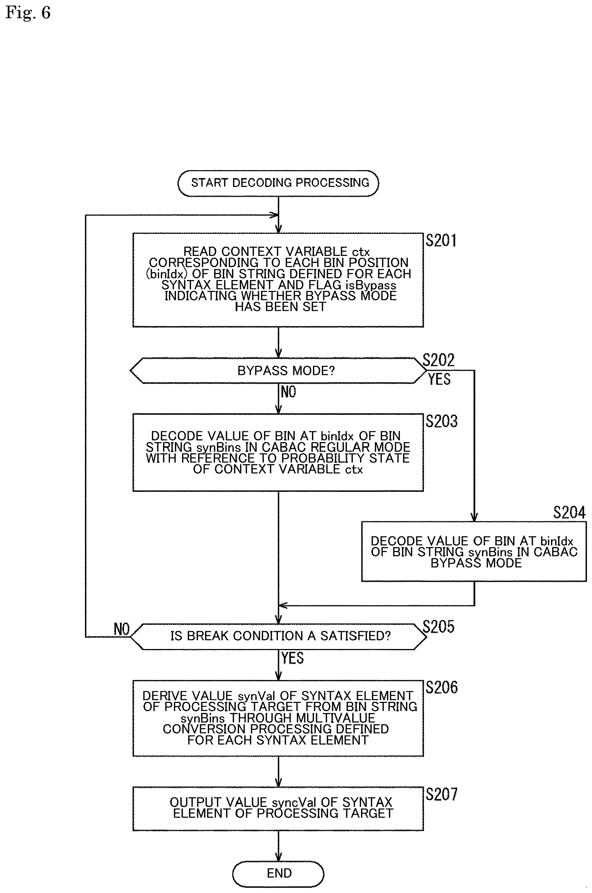

Next, decoding processing executed by the decoding device 200 will be described with reference to the flowchart of Fig. 6.

When decoding processing is started, the selection unit 221 of the decoding device 200 reads a context variable ctx corresponding to each bin position (binIdx) of a bin string defined for each syntax element and the flag isBypass indicating whether the bypass mode has been set in step S201.

In step S202, the selection unit 221 determines whether the bypass mode has been set. If isBypass=0 and it is determined that the normal mode has been set, processing proceeds to step S203.

In step S203, the arithmetic decoding unit 223 performs context decoding. That is, the arithmetic decoding unit 223 decodes coded data in the normal mode of CABAC with reference to the probability state of the context variable ctx to generate a value of a bin at a bin position (binIdx) of a bin string (synBins). When processing of S203 ends, processing proceeds to step S205.

If isBypass=1 in step S202 and it is determined that the bypass mode has been set, processing proceeds to step S204.

In step S204, the arithmetic decoding unit 224 performs bypass decoding. That is, the arithmetic decoding unit 224 decodes the coded data in the bypass mode of CABAC to generate a value of a bin at a bin position (binIdx) of the bin string (synBins). When processing of S204 ends, processing proceeds to step S205.

In step S205, the selection unit 225 determines whether a predetermined break condition A is satisfied. The break condition A is defined on the basis of values of the bin string from binIdx=0 to binIdx=k (current position k of binIdx) and a binarization method for each syntax element.

If it is determined that the break condition A is not satisfied, processing returns to step S201 and subsequent processing is executed in order to generate a value of a bin at the next bin position (binIdx). That is, processing of steps S201 to S205 is executed for each bin position (binIdx).

If it is determined that the break condition A is satisfied in step S205, processing proceeds to step S206.

In step S206, the multivalue conversion unit 226 derives a syntax element value (syncVal) from the bin string (synBins) through multivalue conversion processing defined for each syntax element.

In step S207, the multivalue conversion unit 226 outputs the derived syntax element value (syncVal) to the outside of the decoding device 200.

In this decoding processing, the present technology described in <1. Coding of ST identifier> is applied. That is, the arithmetic decoding unit 223 performs arithmetic decoding in the normal mode of CABAC with reference to a fixed context variable ctx (for example, "0") set for the first bin of a bin string of the secondary transform control information (ST identifier lfnst_idx) in step S203.

By doing so, the decoding device 200 can simplify derivation of a context variable of the ST identifier while maintaining coding efficiency. Further, the decoding device 200 can reduce a memory size for holding context variables of the ST identifier while maintaining coding efficiency. That is, the decoding device 200 can curb an increase in the load of decoding processing.

Further, the arithmetic decoding unit 224 may arithmetically decode the second bin of the bin string in the bypass mode of CABAC on the basis of the bypass flag set for the second bin in step S204 (Method 1).

Further, the arithmetic decoding unit 223 may perform arithmetic decoding in the normal mode of CABAC with reference to a context variable ctx (for example, "0") shared by the first bin set for the second bin of the bin string in step S203 (Method 2).

<4. Third embodiment>

<Image coding device>

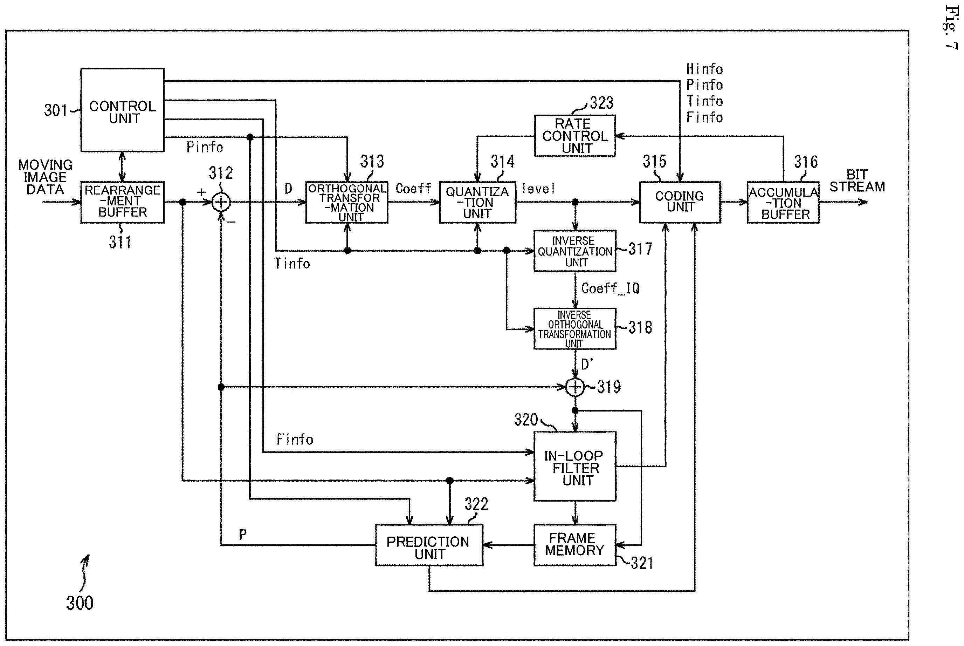

Fig. 7 is a block diagram showing an example of a configuration of an image coding device that is an aspect of an information processing device to which the present technology is applied. The image coding device 300 shown in Fig. 7 is a device that codes image data of a moving image. For example, the image coding device 300 can code image data of a moving image by the coding method described in any of the above-mentioned non-patent literature.

Although Fig. 7 shows major components such as processing units (blocks) and data flows, processing units and data flows are not limited to those shown in Fig. 7. That is, a processing unit that is not shown in Fig. 7 as a block and processing and a data flow that are not shown in Fig. 7 as arrows and the like may be present in the image coding device 300.

As shown in Fig. 7, the image coding device 300 includes a control unit 301, a rearrangement buffer 311, an calculation unit 312, an orthogonal transformation unit 313, a quantization unit 314, a coding unit 315, an accumulation buffer 316, an inverse quantization unit 317, an inverse orthogonal transformation unit 318, a calculation unit 319, an in-loop filter unit 320, a frame memory 321, a prediction unit 322, and a rate control unit 323.

<Control unit>

On the basis of a block size of an external or predetermined processing unit, the control unit 301 divides moving image data held by the rearrangement buffer 311 into blocks (CU, PU, transform block, and the like) in the processing unit. Further, the control unit 301 determines coding parameters (header information Hinfo, prediction mode information Pinfo, transform information Tinfo, filter information Finfo, and the like) to be supplied to each block, for example, on the basis of rate-distortion optimization (RDO).

Details of such coding parameters will be described later. When the control unit 301 determines the coding parameters as described above, the control unit 301 supplies them to each block. Specifically, it is as follows.

The header information Hinfo is supplied to each block.

The prediction mode information Pinfo is supplied to the coding unit 315 and the prediction unit 322.

The transform information Tinfo is supplied to the coding unit 315, the orthogonal transformation unit 313, the quantization unit 314, the inverse quantization unit 317, and the inverse orthogonal transformation unit 318.

The filter information Finfo is supplied to the in-loop filter unit 320.

<Rearrangement buffer>

Each field (input image) of moving image data is input to the image coding device 300 in the order of reproduction (display) thereof. The rearrangement buffer 311 acquires and holds (stores) input images in the order of reproduction (display) thereof. The rearrangement buffer 311 rearranges the input images in coding order (decoding order) or divides the input images into blocks in the processing unit on the basis of control of the control unit 301. The rearrangement buffer 311 supplies each processed input image to the calculation unit 312. Further, the rearrangement buffer 311 supplies each input image (original image) to the prediction unit 322 and the in-loop filter unit 320.

<Calculation unit>

The calculation unit 312 receives an image I corresponding to a block in the processing unit and a predicted image P supplied from the prediction unit 322 as inputs, subtracts the predicted image P from the image I according to the following formula to derive a predicted residual D, and supplies the predicted residual D to the orthogonal transformation unit 313.

$$D = I - P$$

<Orthogonal transformation unit>

The orthogonal transformation unit 313 receives the predicted residual D supplied from the calculation unit 312 and transform information Tinfo supplied from the control unit 301 as inputs and performs orthogonal transformation on the predicted residual D on the basis of the transform information Tinfo to derive a transform coefficient Coeff. For example, the orthogonal transformation unit 313 performs primary transformation on the predicted residual D to generate a primary transform coefficient, and performs secondary transformation on the primary transform coefficient on the basis of an ST identifier to generate a secondary transform coefficient. The orthogonal transformation unit 313 supplies the obtained secondary transform coefficient to the quantization unit 314 as a transform coefficient Coeff.

<Quantization unit>

The quantization unit 314 receives the transform coefficient Coeff supplied from the orthogonal transformation unit 313 and the transform information Tinfo supplied from the control unit 301 as inputs and scales (quantizes) the transform coefficient Coeff on the basis of the transform information Tinfo. The rate of quantization is controlled by the rate control unit 323. The quantization unit 314 supplies the quantized transform coefficient obtained by such quantization, that is, a quantized transform coefficient level level to the coding unit 315 and the inverse quantization unit 317.

<Coding unit>

The coding unit 315 receives the quantized transform coefficient level level supplied from the quantization unit 314, various coding parameters (header information Hinfo, prediction mode information Pinfo, transform information Tinfo, filter information Finfo, and the like) supplied from the control unit 301, information about a filter, such as a filter coefficient supplied from the in-loop filter unit 320, and information about an optimum prediction mode supplied from the prediction unit 322 as inputs. The coding unit 315 performs variable length coding (for example, arithmetic coding) on the quantized transform coefficient level level to generate a bit stream (coded data).

Further, the coding unit 315 derives residual information Rinfo from the quantized transform coefficient level level and codes the residual information Rinfo to generate a bit stream.

Further, the coding unit 315 includes the information about the filter supplied from the in-loop filter unit 320 in the filter information Finfo and includes the information about the optimum prediction mode supplied from the prediction unit 322 in the prediction mode information Pinfo. Then, the coding unit 315 codes the aforementioned various coding parameters (header information Hinfo, prediction mode information Pinfo, conversion information Tinfo, filter information Finfo, and the like) to generate bit streams.

Further, the coding unit 315 multiplexes the bit streams of the various types of information generated as described above to generate coded data. The coding unit 315 supplies the coded data to the accumulation buffer 316.

<Accumulation buffer>

The accumulation buffer 316 temporarily holds the coded data obtained in the coding unit 315. The accumulation buffer 316 outputs the held coded data as, for example, a bit stream or the like, to the outside of the image coding device 300 at a predetermined timing. For example, this coded data is transmitted to a decoding side via an arbitrary recording medium, an arbitrary transmission medium, an arbitrary information processing device, or the like. That is, the accumulation buffer 316 is also a transmission unit that transmits coded data (bit stream).

<Inverse quantization unit>

The inverse quantization unit 317 performs processing with respect to inverse quantization. For example, the inverse quantization unit 317 receives the quantized transform coefficient level level supplied from the quantization unit 314 and the transform information Tinfo supplied from the control unit 301 as inputs and scales (inversely quantizes) the value of the quantized transform coefficient level level on the basis of the transform information Tinfo. This inverse quantization is inverse processing of quantization performed in the quantization unit 314. The inverse quantization unit 317 supplies a transform coefficient Coeff_IQ obtained through such inverse quantization to the inverse orthogonal transformation unit 318.

<Inverse orthogonal transformation unit>

The inverse orthogonal transformation unit 318 performs processing with respect to inverse orthogonal transformation. For example, the inverse orthogonal transformation unit 318 receives the transform coefficient Coeff_IQ supplied from the inverse quantization unit 317 and the transform information Tinfo supplied from the control unit 301 as inputs and performs inverse orthogonal transformation on the transform coefficient Coeff_IQ on the basis of the transform information Tinfo to derive a predicted residual D'. This inverse orthogonal transformation is inverse processing of orthogonal transformation performed by the orthogonal transformation unit 313. That is, the inverse orthogonal transformation unit 318 can perform adaptive inverse orthogonal transformation (AMT) for adaptively selecting a type (transform coefficient) of inverse orthogonal transformation.

The inverse orthogonal transformation unit 318 supplies the predicted residual D' obtained through such inverse orthogonal transformation to the calculation unit 319. Since the inverse orthogonal transformation unit 318 is the same as the inverse orthogonal transformation unit (which will be described later) on the decoding side, description (which will be made later) given on the decoding side can be applied to the inverse orthogonal transformation unit 318.

<Calculation unit>

The calculation unit 319 receives the predicted residual D' supplied from the inverse orthogonal transformation unit 318 and the predicted image P supplied from the prediction unit 322. The calculation unit 319 adds the predicted residual D' to the predicted image P corresponding to the predicted residual D' to derive a locally decoded image Rlocal. The calculation unit 319 supplies the derived locally decoded image Rlocal to the in-loop filter unit 320 and the frame memory 321.

<In-loop filter unit>

The in-loop filter unit 320 performs processing with respect to in-loop filter processing. For example, the in-loop filter unit 320 receives the locally decoded image Rlocal supplied from the calculation unit 319, the filter information Finfo supplied from the control unit 301, and the input image (original image) supplied from the rearrangement buffer 311 as inputs. Meanwhile, Information input to the in-loop filter unit 320 is arbitrary, and information other than this information may be input. For example, information such as a prediction mode, motion information, a code amount target value, a quantization parameter QP, a picture type, and a block (CU, CTU, or the like) may be input to the in-loop filter unit 320 as necessary.

The in-loop filter unit 320 appropriately filters the locally decoded image Rlocal on the basis of the filter information Finfo. The in-loop filter unit 320 also uses the input image (original image) and other input information for filter processing as necessary.

For example, as described in NPL 11, the in-loop filter unit 320 applies four in-loop filter, a bilateral filter, a deblocking filter (DBF), an adaptive offset filter (Sample Adaptive Offset (SAO)), and an adaptive loop filter (ALF) in this order. Which filter is applied and which order is applied are arbitrary and can be appropriately selected.

Of course, filter processing performed by the in-loop filter unit 320 is arbitrary and is not limited to the above example. For example, the in-loop filter unit 320 may apply a Wiener filter or the like.

The in-loop filter unit 320 supplies the filtered locally decoded image Rlocal to the frame memory 321. When information about a filter, such as a filter coefficient, is transmitted to the decoding side, the in-loop filter unit 320 supplies the information about the filter to the coding unit 315.

<Frame memory>

The frame memory 321 performs processing with respect to storage of data related to an image. For example, the frame memory 321 receives the locally decoded image Rlocal supplied from the calculation unit 319 and the filtered locally decoded image Rlocal supplied from the in-loop filter unit 320 as inputs and holds (stores) them. Further, the frame memory 321 reconstructs a decoded image R for each picture unit using the locally decoded image Rlocal and holds the decoded image R (stores it in a buffer in the frame memory 321). The frame memory 321 supplies the decoded image R (or a part thereof) to the prediction unit 322 in response to a request of the prediction unit 322.

<Prediction unit>

The prediction unit 322 performs processing with respect to generation of a predicted image. For example, the prediction unit 322 receives the prediction mode information Pinfo supplied from the control unit 301, the input image (original image) supplied from the rearrangement buffer 311, and the decoded image R (or a part thereof) read from the frame memory 321 as inputs. The prediction unit 322 performs prediction processing such as inter-prediction and intra-prediction using the prediction mode information Pinfo and the input image (original image), performs prediction using the decoded image R as a reference image, and performs motion compensation processing on the basis of the prediction result to generate a predicted image P. The prediction unit 322 supplies the generated predicted image P to the calculation unit 312 and the calculation unit 319. Further, the prediction unit 322 supplies information regarding the prediction mode selected by the above processing, that is, the optimum prediction mode, to the coding unit 315 as necessary.

<Rate control unit>

The rate control unit 323 performs processing with respect to rate control. For example, the rate control unit 323 controls the rate of the quantization operation of the quantization unit 314 on the basis of the code amount of coded data accumulated in the accumulation buffer 316 such that overflow or underflow does not occur.

Meanwhile, the processing units (the control unit 301, and the rearrangement buffer 311 to the rate control unit 323) have arbitrary configurations. For example, each processing unit may be configured as a logic circuit for realizing the aforementioned processing. Further, each processing unit may include, for example, a CPU, a ROM, a RAM, and the like and execute a program using these components to realize the aforementioned processing. Of course, each processing unit may have both the aforementioned configurations, realize parts of the aforementioned processing according to a logic circuit, and realize the other part of the processing by executing a program. The processing units may have independent configurations, for example, some processing units may realize parts of the aforementioned processing according to a logic circuit, some other processing units may realize the aforementioned processing by executing a program, and some other processing units may realize the aforementioned processing according to both a logic circuit and execution of a program.

In the image coding device 300 having the above configuration, the present technology described in <1. Coding of ST identifier> can be applied to the coding unit 315. That is, the coding unit 315 has the same configuration as the coding device 100 shown in Fig. 3 and performs the same processing.

By doing so, the image coding device 300 can simplify derivation of a context variable of the ST identifier while maintaining coding efficiency. Further, the image coding device 300 can reduce a memory size for holding context variables of the ST identifier while maintaining coding efficiency. That is, the image coding device 300 can curb an increase in the load of coding processing.

<Flow of image coding processing>

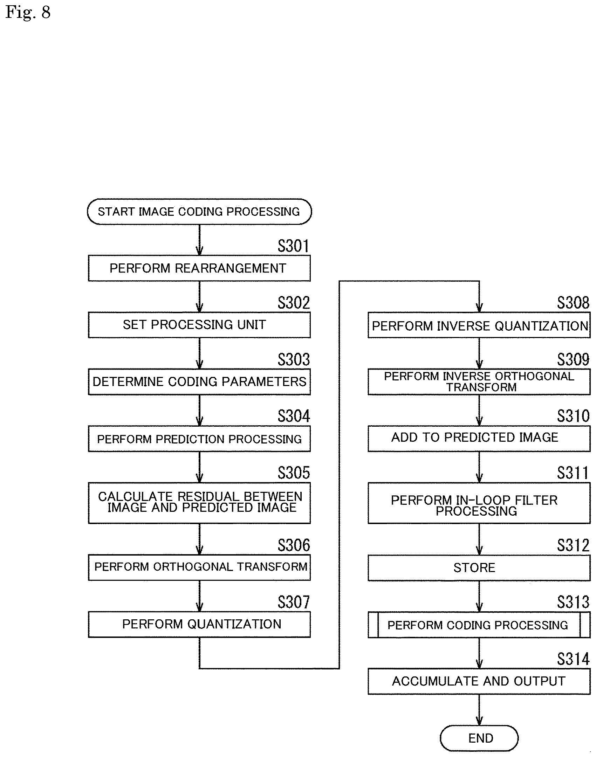

Next, an example of a flow of image coding processing executed by the image coding device 300 having the above-mentioned configuration will be described with reference to the flowchart of Fig. 8.

When image coding processing is started, the rearrangement buffer 311 is controlled by the control unit 301 to rearrange the order of frames of input moving image data from display order to coding order in step S301.

In step S302, the control unit 301 sets a processing unit (performs block division) for an input image held in the rearrangement buffer 311.

In step S303, the control unit 301 determines (sets) coding parameters with respect to the input image held in the rearrangement buffer 311.

In step S304, the prediction unit 322 performs prediction processing to generate a predicted image or the like in an optimum prediction mode. For example, in this prediction processing, the prediction unit 322 performs intra-prediction to generate a predicted image or the like in an optimum intra-prediction mode, performs inter-prediction to generate a predicted image or the like in an optimum inter-prediction mode, selects an optimum prediction mode therefrom on the basis of a cost function value and the like.

In step S305, the calculation unit 312 calculates a difference between the input image and the predicted image in the optimum mode selected through prediction processing in step S304. That is, the calculation unit 312 generates a predicted residual D between the input image and the predicted image. The amount of data of the predicted residual D obtained in this manner is reduced as compared to the original image data. Accordingly, the amount of data can be compressed as compared to a case where the image is coded as it is.

In step S306, the orthogonal transformation unit 313 performs orthogonal transform processing on the predicted residual D generated through processing of step S305 to derive a transform coefficient Coeff.

In step S307, the quantization unit 314 quantizes the transform coefficient Coeff obtained through processing of step S306 by using a quantization parameter calculated by the control unit 301 or the like and derives a quantized transform coefficient level level.

In step S308, the inverse quantization unit 317 inversely quantizes the quantized transform coefficient level level generated through processing of step S307 with characteristics corresponding to characteristics of quantization of step S307 and derives a transform coefficient Coeff_IQ.

In step S309, the inverse orthogonal transformation unit 318 performs inverse orthogonal transformation on the transform coefficient Coeff_IQ obtained through processing of step S308 using a method corresponding to orthogonal transform processing of step S306 to derive a predicted residual D'. Since this inverse orthogonal transformation processing is the same as inverse orthogonal transform processing (which will be described later) performed on the decoding side, description (which will be made later) performed on the decoding side can be applied to inverse orthogonal transform processing in step S309.

In step S310, the calculation unit 319 adds the predicted image obtained through prediction processing of step S304 to the predicted residual D' derived through processing of step S309 to generate a locally decoded image.

In step S311, the in-loop filter unit 320 performs in-loop filter processing on the locally decoded image derived through processing of step S310.

In step S312, the frame memory 321 stores the locally decoded image derived through processing of step S310 and the locally decoded image filtered in step S311.

In step S313, the coding unit 315 codes the quantized transform coefficient level level obtained through processing of step S307. For example, the coding unit 315 codes the quantized transform coefficient level level, which is information about an image, through arithmetic coding or the like to generate coded data.

At this time, the coding unit 315 codes various coding parameters (header information Hinfo, prediction mode information Pinfo, and transform information Tinfo). Further, the coding unit 315 derives residual information RInfo from the quantized transform coefficient level level and codes the residual information RInfo.

In step S314, the accumulation buffer 316 accumulates coded data obtained in this manner and outputs the coded data as a bit stream to the outside of the image coding device 300, for example. This bit stream is transmitted to the decoding side via, for example, a transmission line or a recording medium. In addition, the rate control unit 323 performs rate control as necessary.

When processing of step S314 ends, image coding processing ends.

In image coding processing in the above-mentioned flow, the present technology is applied to coding processing of step S313. That is, coding processing in the same flow as that in Fig. 4 is performed in step S313. That is, the coding unit 315 performs coding processing to which the present technology described in <1. Coding of ST identifier> is applied.

By doing so, the image coding device 300 can simplify derivation of a context variable of the ST identifier while maintaining coding efficiency. Further, the image coding device 300 can reduce a memory size for holding context variables of the ST identifier while maintaining coding efficiency. That is, the image coding device 300 can curb an increase in the load of coding processing.

<5. Fourth embodiment>

<Image decoding device>

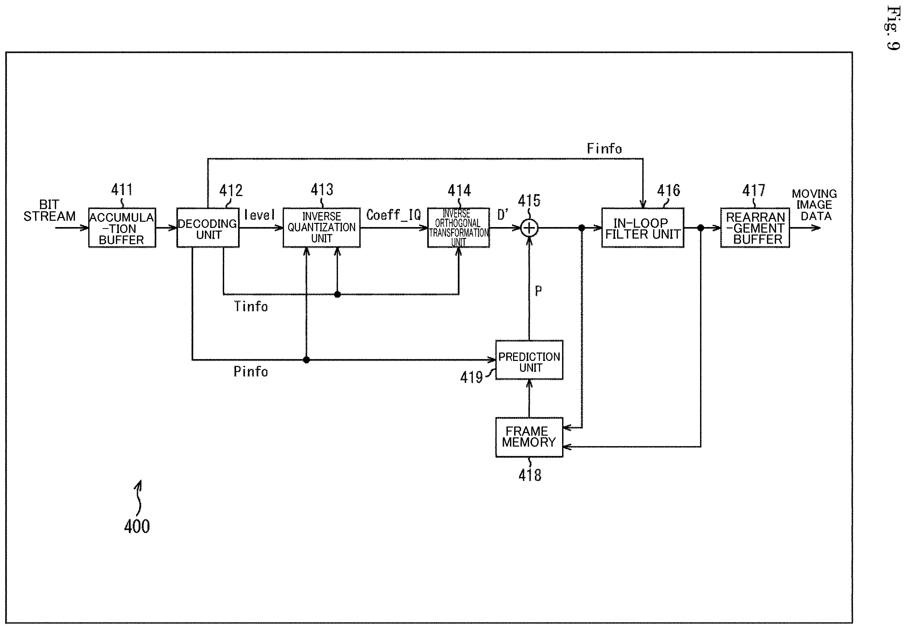

Fig. 9 is a block diagram showing an example of a configuration of an image decoding device that is one aspect to which the present technology is applied. The image decoding device 400 shown in Fig. 9 is a device that decodes coded data of a moving image. For example, the image decoding device 400 can decode coded data through a decoding method described in any of the above-mentioned non-patent literature. For example, the image decoding device 400 decodes coded data (bit stream) generated by the image coding device 300 described above.

Although Fig. 9 shows major components such as processing units (blocks) and data flows, processing units and data flows are not limited to those shown in Fig. 9. That is, processing units that are not illustrated in Fig. 9 as blocks and processing and data flows that are not illustrated in Fig. 9 as arrows and the like may be present in the image decoding device 400.

In Fig. 9, the image decoding device 400 includes an accumulation buffer 411, a decoding unit 412, an inverse quantization unit 413, an inverse orthogonal transformation unit 414, a calculation unit 415, an in-loop filter unit 416, a rearrangement buffer 417, a frame memory 418, and a prediction unit 419. The prediction unit 419 includes an intra-prediction unit and an inter-prediction unit which are not shown. The image decoding device 400 is a device for generating moving image data by decoding coded data (bit stream).

<Accumulation buffer>

The accumulation buffer 411 acquires a bit stream input to the image decoding device 400 and holds (stores) the bit stream. The accumulation buffer 411 supplies the stored bit stream to the decoding unit 412 at a predetermined timing or when a predetermined condition is satisfied.

<Decoding unit>

The decoding unit 412 performs processing with respect to image decoding. For example, the decoding unit 412 receives the bit stream supplied from the accumulation buffer 411 as an input and performs variable length decoding on a syntax value of each syntax element to derive parameters from the bit stream according to definition of a syntax table.

Parameters derived from syntax elements and syntax values of the syntax elements may include, for example, information such as header information Hinfo, prediction mode information Pinfo, transform information Tinfo, residual information Rinfo, and filter information Finfo. That is, the decoding unit 412 parses (analyzes and acquires) this information from the bit stream. This information will be described below.

<Header information Hinfo>

The header information Hinfo may include, for example, header information such as Video Parameter Set (VPS)/Sequence Parameter Set (SPS)/Picture Parameter Set (PPS)/slice header (SH). The header information Hinfo may include, for example, information that defines an image size (width PicWidth, height PicHeight), a bit depth (brightness bitDepthY, color difference bitDepthC), a color difference array type ChromaArrayType, a maximum value MaxCUSize/minimum value MinCUSize of a CU size, a maximum depth MaxQTDepth/minimum depth MinQTDepth of quadtree division, a maximum depth MaxBTDepth/minimum depth MinBTDepth of binary-tree division, a maximum value MaxTSSize of a transform skip block (also called a maximum transform skip block size), an on/off flag (also called a valid flag) of each coding tool, and the like.

For example, on/off flags of coding tools included in the header information Hinfo include on/off flags related to transformation and quantization processing described below. An on/off flag of a coding tool can also be construed as a flag indicating whether a syntax related to the coding tool is present in coded data. Further, the on/off flag indicates that the coding tool can be used when the value thereof is 1 (true) and indicates that the coding tool cannot be used when the value thereof is 0 (false). Construction of the flag value may be reversed.

An inter-component prediction enabled flag (ccp_enabled_flag): this is flag information indicating whether inter-component prediction (Cross-Component Prediction (CCP)), also called CC prediction) is available. For example, this flag information indicates that CCP is available if the value thereof is "1" (true) and indicates that CCP is not available if the value thereof is "0" (false).

This CCP is also called inter-component linear prediction (CCLM or CCLMP).

<Prediction mode information Pinfo>

The prediction mode information Pinfo may include, for example, information such as size information PBSize (prediction block size) of a processing target PB (prediction block), intra-prediction mode information IPinfo, and motion prediction information MVinfo.

The intra-prediction mode information IPinfo may include, for example, prev_intra_luma_pred_flag, mpm_idx, and rem_intra_pred_mode in JCTVC-W1005, 7.3.8.5 Coding Unit syntax, a brightness intra-prediction mode IntraPredModeY derived from the syntax thereof, and the like.

In addition, the intra-prediction mode information IPinfo may include, for example, an inter-component prediction flag (ccp_flag (cclmp_flag)), a multiclass linear prediction mode flag (mclm_flag), a color difference sample position type identifier (chroma_sample_loc_type_idx), a color difference MPM identifier (chroma_mpm_idx), a brightness intra-prediction mode (intraPredModeC) derived from these syntaxes, and the like.

The inter-component prediction flag (ccp_flag (cclmp_flag)) is flag information indicating whether inter-component linear prediction is applied. For example, when ccp_flag == 1, it indicates that inter-component prediction is applied, and when ccp_flag == 0, it indicates that inter-component prediction is not applied.

The multiclass linear prediction mode flag (mclm_flag) is information about a linear prediction mode (linear prediction mode information). More specifically, the multiclass linear prediction mode flag (mclm_flag) is flag information indicating whether to set a multiclass linear prediction mode. For example, "0" indicates a 1-class mode (single class mode) (for example, CCLMP) and "1" indicates a 2-class mode (multiclass mode) (for example, MCLMP).

The color difference sample position type identifier (chroma_sample_loc_type_idx) is an identifier for identifying a type of a pixel position of a color difference component (also referred to as a color difference sample position type). For example, when the color difference array type (ChromaArrayType), which is information about a color format, indicates 420 format, a color difference sample position type identifier is assigned as represented by the following formula.

chroma_sample_loc_type_idx == 0: Type2
chroma_sample_loc_type_idx == 1: Type3
chroma_sample_loc_type_idx == 2: Type0
chroma_sample_loc_type_idx == 3: Type1

This color difference sample position type identifier (chroma_sample_loc_type_idx) is transmitted (stored) as information (chroma_sample_loc_info ()) about the pixel position of the color difference component.

The color difference MPM identifier (chroma_mpm_idx) is an identifier indicating which prediction mode candidate in a color difference intra-prediction mode candidate list (intraPredModeCandListC) is designated as a color difference intra-prediction mode.

The motion prediction information MVinfo may include, for example, information such as merge_idx, merge_flag, inter_pred_idc, ref_idx_LX, mvp_lX_flag, X={0,1}, and mvd (refer to JCTVC-W1005, 7.3.8.6 Prediction Unit Syntax, for example).

Of course, information included in the prediction mode information Pinfo is arbitrary, and information other than this information may be included therein.

<Transform information Tinfo>

The transformation information Tinfo may include, for example, the following information. Of course, the information included in the transformation information Tinfo is arbitrary and information other than this information may be included.

Width size TBWSize and height TBHSize of processing target transform block (or TBWSize with a base of 2 and logarithmic values log2TBWSize and log2TBHSize of TBHSize are also available)

Transform skip flag (ts_flag): Flag indicating whether (inverse) primary transformation and (inverse) secondary transformation are skipped Scan identifier (scanIdx)
Quantization parameter (qp)
Quantization matrix (scaling_matrix (for example, JCTVC-W1005, 7.3.4 Scaling list data syntax))

<Residual information Rinfo>

The residual information Rinfo (refer to 7.3.8.11 Residual Coding syntax of JCTVC-W1005, for example) may include, for example, the following syntax.
cbf (coded_block_flag): Flag indicating presence or absence of residual data last_sig_coeff_x_pos: Last non-zero coefficient X coordinate
last_sig_coeff_y_pos: Last non-zero coefficient Y coordinate
coded_sub_block_flag: Flag indicating presence or absence of a subblock non-zero coefficient
sig_coeff_flag: Flag indicating presence or absence of a non-zero coefficient gr1_flag: Flag indicating whether a level of a non-zero coefficient is greater than 1 (also called the GR1 flag)
gr2_flag: Flag indicating whether a level of a non-zero coefficient is greater than
2 (also called the GR2 flag) sign_flag: Sign indicating positive or negative of a non-zero coefficient (also called sine code)
coeff_abs_level_remaining: Residual level of non-zero coefficient (also called non-zero coefficient residual level),
and the like

Of course, the information included in the residual information Rinfo is arbitrary and information other than this information may be included.

<Filter information Finfo>

The filter information Finfo may include, for example, control information about the following filter processing.

Control information about a deblocking filter (DBF)

Control information about a pixel adaptive offset (SAO)

Control information about an adaptive loop filter (ALF)

Control information about other linear/non-linear filters

More specifically, the filter information Finfo may include, for example, a picture to which each filter is applied, information for designating an area in the picture, filter On/Off control information in CU units, filter On/Off control information about boundaries of slices and tiles, and the like. Of course, the information included in the filter information Finfo is arbitrary and information other than this information may be included.

Return to description of the decoding unit 412. The decoding unit 412 derives a quantized transform coefficient level level of each coefficient position in each transform block with reference to the residual information Rinfo. The decoding unit 412 supplies the quantized transform coefficient level level to the inverse quantization unit 413.

Further, the decoding unit 412 supplies the parsed header information Hinfo, prediction mode information Pinfo, quantized transform coefficient level level, transform information Tinfo, and filter information Finfo to each block. Specifically, it is as follows.

The header information Hinfo is supplied to the inverse quantization unit 413, the inverse orthogonal transformation unit 414, the prediction unit 419, and the in-loop filter unit 416.

The prediction mode information Pinfo is supplied to the inverse quantization unit 413 and the prediction unit 419.

The transform information Tinfo is supplied to the inverse quantization unit 413 and the inverse orthogonal transformation unit 414.

The filter information Finfo is supplied to the in-loop filter unit 416.

Of course, the above example is an example and is not limited to this example. For example, each coding parameter may be supplied to an arbitrary processing unit. In addition, other information may be supplied to an arbitrary processing unit.

<Inverse quantization unit>

The inverse quantization unit 413 has at least a configuration necessary to perform processing with respect to inverse quantization. For example, the inverse quantization unit 413 receives the transform information Tinfo and the quantization transform coefficient level level supplied from the decoding unit 412 as inputs and scales the value of the quantization transform coefficient level level on the basis of the transform information Tinfo (inverse quantization) to derive the transform coefficient Coeff_IQ after inverse quantization.

This inverse quantization is performed as inverse processing of quantization performed by the quantization unit 314. Further, this inverse quantization is the same processing as inverse quantization performed by the inverse quantization unit 317. That is, the inverse quantization unit 317 performs the same processing (inverse quantization) as that of the inverse quantization unit 413.

The inverse quantization unit 413 supplies the derived transform coefficient Coeff_IQ to the inverse orthogonal transformation unit 414.

<Inverse orthogonal transformation unit>

The inverse orthogonal transformation unit 414 performs processing with respect to inverse orthogonal transformation. For example, the inverse orthogonal transformation unit 414 receives the transform coefficient Coeff_IQ supplied from the inverse quantization unit 413 and the transform information Tinfo supplied from the decoding unit 412 as inputs and performs inverse orthogonal transform processing on the transform coefficient Coeff_IQ on the basis of the transform information Tinfo to derive a predicted residual D'. For example, the inverse orthogonal transformation unit 414 performs inverse secondary transformation on the transform coefficient Coeff_IQ on the basis of the ST identifier to generate a primary transform coefficient and perform primary transformation on the primary transform coefficient to generate a predicted residual D'

This inverse orthogonal transformation is performed as inverse processing of orthogonal transformation performed by the orthogonal transformation unit 313. Further, this inverse orthogonal transformation is the same processing as inverse orthogonal transformation performed by the inverse orthogonal transformation unit 318. That is, the inverse orthogonal transformation unit 318 performs the same processing (inverse orthogonal transformation) as that of the inverse orthogonal transformation unit 414.

The inverse orthogonal transformation unit 414 supplies the derived predicted residual D' to the calculation unit 415.

<Calculation unit>

The calculation unit 415 performs processing with respect to addition of information about images. For example, the calculation unit 415 receives the predicted residual D' supplied from the inverse orthogonal transformation unit 414 and the predicted image P supplied from the prediction unit 419 as inputs. As represented by the following formula, the calculation unit 415 adds the predicted residual D' to the predicted image P (predicted signal) corresponding to the predicted residual D' to derive a locally decoded image Rlocal.

$$Rlocal = D' + P$$

The calculation unit 415 supplies the derived locally decoded image Rlocal to the in-loop filter unit 416 and the frame memory 418.

<In-loop filter unit>

The in-loop filter unit 416 performs processing with respect to in-loop filter processing. For example, the in-loop filter unit 416 receives the locally decoded image Rlocal supplied from the calculation unit 415 and the filter information Finfo supplied from the decoding unit 412 as inputs. Meanwhile, Information input to the in-loop filter unit 416 is arbitrary, and information other than this information may be input.

The in-loop filter unit 416 appropriately filters the locally decoded image Rlocal on the basis of the filter information Finfo.

For example, as described in NPL 11, the in-loop filter unit 416 applies four in-loop filter, a bilateral filter, a deblocking filter (DBF), an adaptive offset filter (Sample Adaptive Offset (SAO)), and an adaptive loop filter (ALF) in this order. Which filter is applied and which order is applied are arbitrary and can be appropriately selected.

The in-loop filter unit 416 performs filter processing corresponding to filter processing performed by the coding side (for example, the in-loop filter unit 320 of the image coding device 300). Of course, filter processing performed by the in-loop filter unit 416 is arbitrary and is not limited to the above example. For example, the in-loop filter unit 416 may apply a Wiener filter or the like.

The in-loop filter unit 416 supplies the filtered locally decoded image Rlocal to the rearrangement buffer 417 and the frame memory 418.

<Rearrangement buffer>

The rearrangement buffer 417 receives the locally decoded image Rlocal supplied from the in-loop filter unit 416 as an input and holds (stores) it. The rearrangement buffer 417 reconstructs a decoded image R for each picture unit using the locally decoded image Rlocal and holds it (stores it in the buffer). The rearrangement buffer 417 rearranges obtained decoded images R from decoding order to reproduction order. The rearrangement buffer 417 outputs a group of rearranged decoded images R as moving image data to the outside of the image decoding device 400.

<Frame memory>

The frame memory 418 performs processing with respect to storage of data related to an image. For example, the frame memory 418 receives the locally decoded image Rlocal supplied from the calculation unit 415 as an input, reconstructs a decoded image R for each picture unit, and stores it in a buffer in the frame memory 418.

Further, the frame memory 418 receives the in-loop filtered locally decoded image Rlocal supplied from the in-loop filter unit 416 as an input, reconstructs a decoded image R for each picture, and stores it in the buffer in the frame memory 418. The frame memory 418 appropriately supplies a stored decoded image R (or a part thereof) to the prediction unit 419 as a reference image.

The frame memory 418 may store header information Hinfo, prediction mode information Pinfo, transform information Tinfo, filter information Finfo, and the like related to generation of a decoded image.

<Prediction unit>

The prediction unit 419 performs processing with respect to generation of a predicted image. For example, the prediction unit 419 receives the prediction mode information Pinfo supplied from the decoding unit 412 as an input and performs prediction through a prediction method designated by the prediction mode information Pinfo to derive the predicted image P. At the time of derivation, the prediction unit 419 uses the decoded image R (or a part thereof) before or after the filter, stored in the frame memory 418 designated by the prediction mode information Pinfo as a reference image. The prediction unit 419 supplies the derived predicted image P to the calculation unit 415.

These processing units (accumulation buffer 411 to prediction unit 419) have arbitrary configurations. For example, each processing unit may be configured as a logic circuit for realizing the aforementioned processing. Further, each processing unit may include, for example, a CPU, a ROM, a RAM, and the like and execute a program using these components to realize the aforementioned processing. It goes without saying that each processing unit may have both the aforementioned configurations, realize parts of the aforementioned processing according to a logic circuit, and realize the other part of the processing by executing a program. The processing units may have independent configurations, for example, some processing units may realize parts of the aforementioned processing according to a logic circuit, some other processing units may realize the aforementioned processing by executing a program, and some other processing units may realize the aforementioned processing according to both a logic circuit and execution of a program.

In the image decoding device 400 having the above configuration, the present technology described in <1. Coding of ST identifier> can be applied to the decoding unit 412. That is, the decoding unit 412 has the same configuration as the decoding device 200 shown in Fig. 5 and performs the same processing.

By doing so, the image decoding device 400 can simplify derivation of a context variable of the ST identifier while maintaining coding efficiency. Further, the image decoding device 400 can reduce a memory size for holding the context variable of the ST identifier while maintaining coding efficiency. That is, the image decoding device 400 can curb an increase in the load of decoding processing.

<Flow of image coding processing>

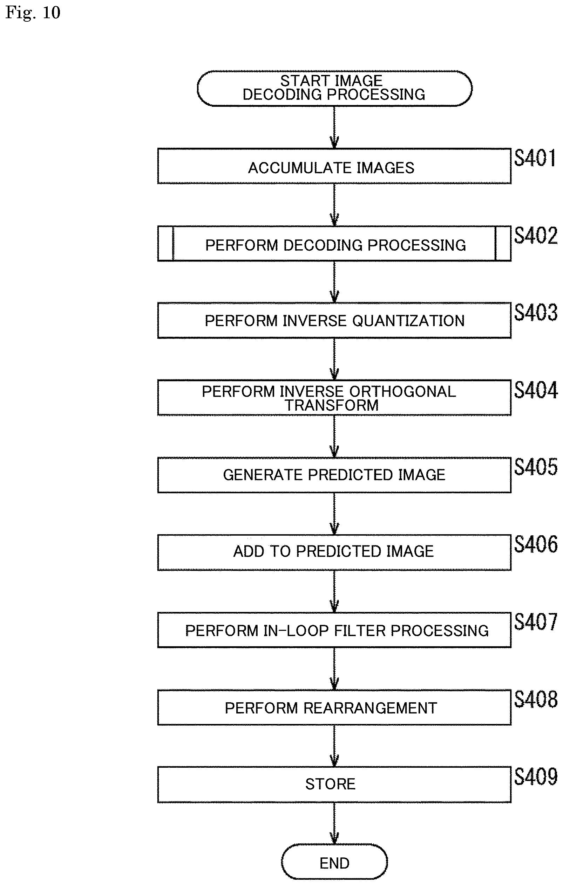

Next, an example of a flow of image decoding processing executed by the image decoding device 400 having the above configuration will be described with reference to the flowchart of Fig. 10.

When image decoding processing is started, the accumulation buffer 411 acquires coded data (bit stream) supplied from the outside of the image decoding device 400 and holds (accumulates) it in step S401.

In step S402, the decoding unit 412 decodes the coded data (bit stream) and obtains a quantized transform coefficient level level. Further, the decoding unit 412 parses (analyzes and acquires) various coding parameters from the coded data (bit stream) through this decoding.

In step S403, the inverse quantization unit 413 performs inverse quantization, which is inverse processing of quantization performed on a coding side, on the quantized transform coefficient level level obtained through processing of step S402 to obtain a transform coefficient Coeff_IQ.

In step S404, the inverse orthogonal transformation unit 414 performs inverse orthogonal transform processing, which is inverse processing of orthogonal transform processing performed on the coding side, on the transform coefficient Coeff_IQ obtained in step S403 to obtain a predicted residual D'.

In step S405, the prediction unit 419 executes prediction processing using a prediction method designated by the coding side on the basis of the information parsed in step S402 and generates a predicted image P by referring to a reference image stored in the frame memory 418.

In step S406, the calculation unit 415 adds the predicted residual D' obtained in step S404 to the predicted image P obtained in step S405 to derive a locally decoded image Rlocal.

In step S407, the in-loop filter unit 416 performs in-loop filter processing on the locally decoded image Rlocal obtained through processing of step S406.

In step S408, the rearrangement buffer 417 derives a decoded image R using the filtered locally decoded image Rlocal obtained through processing of step S407 and rearranges the order of a group of the decoded image R from decoding order to reproduction order. The group of the decoded image R rearranged in reproduction order is output as a moving image to the outside of the image decoding device 400.

Further, in step S409, the frame memory 418 stores at least one of the locally decoded image Rlocal obtained through processing of step S406 and the filtered locally decoded image Rlocal obtained through processing of step S407.

When the process of step S409 is completed, the image decoding process is completed.

In the image decoding processing in the above-described flow, the present technology is applied to decoding processing of step S402. That is, decoding processing in the same flow as in Fig. 6 is performed in step S402. That is, the decoding unit 412 performs decoding processing to which the present technology described in <1. Coding of ST identifier> is applied.

By doing so, the image decoding device 400 can simplify derivation of a context variable of the ST identifier while maintaining coding efficiency. Further, the image decoding device 400 can reduce a memory size for holding the context variable of the ST identifier while maintaining coding efficiency. That is, the image decoding device 400 can curb an increase in the load of decoding processing.

<6. Supplement>

<Computer>

A series of processing described above can be executed by hardware or software. In the case where the series of processing is executed by software, a program that configures the software is installed on a computer. Here, the computer includes, for example, a computer built in dedicated hardware and a general-purpose personal computer on which various programs are installed to be able to execute various functions.

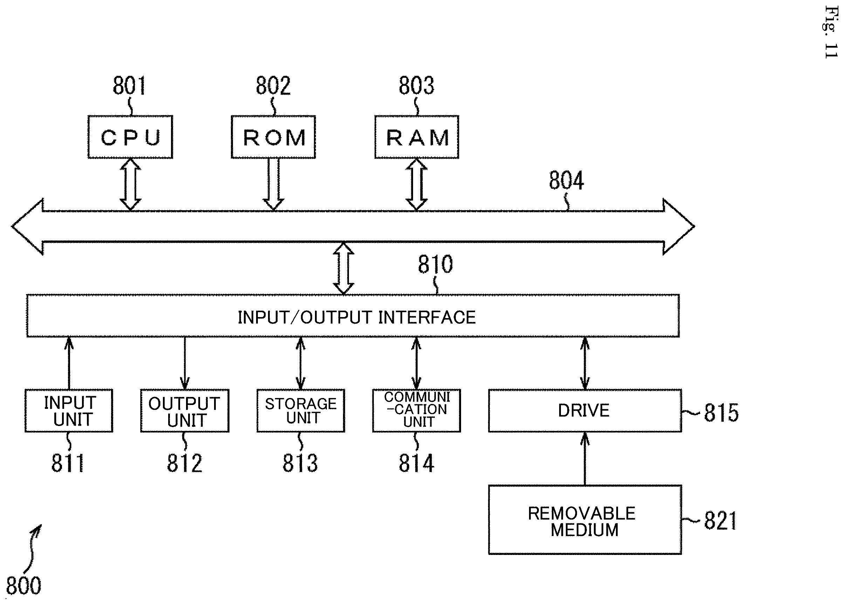

Fig. 11 is a block diagram illustrating an example of hardware configuration of a computer that executes the series of processing described above according to a program.

In a computer 800 illustrated in Fig. 11, a central processing unit (CPU) 801, a read only memory (ROM) 802, and a random access memory (RAM) 803 are connected to each other via a bus 804.

An input/output interface 810 is also connected to the bus 804. An input unit 811, an output unit 812, a storage unit 813, a communication unit 814, and a drive 815 are connected to the input/output interface 810.

The input unit 811 includes, for example, a keyboard, a mouse, a microphone, a touch panel, an input terminal, and the like. The output unit 812 includes, for example, a display, a speaker, an output terminal, and the like. The storage unit 813 includes, for example, a hard disk, a RAM disk, a non-volatile memory, and the like. The communication unit 814 includes, for example, a network interface. The drive 815 drives a removable medium 821 such as a magnetic disk, an optical disc, a magneto-optical disk, or a semiconductor memory.

In the computer configured as above, for example, the CPU 801 performs the above-described series of processes by loading a program stored in the storage unit 813 to the RAM 803 via the input/output interface 810 and the bus 804 and executing the program. Data and the like necessary for the CPU 801 to execute various kinds of processing are also appropriately stored in the RAM 803.

The program executed by the computer can be recorded on, for example, the removable medium 821 as a package medium or the like so as to be applied. In such a case, the program can be installed in the storage unit 813 via the input/output interface 810 by inserting the removable medium 821 into the drive 815.

Further, the program may also be provided via a wired or wireless transmission medium such as a local area network, the Internet, or digital satellite broadcasting. In such a case, the program can be received by the communication unit 814 and installed in the storage unit 813.

In addition, this program can be installed in advance in the ROM 802 or the storage unit 813.

<Application target of present technology>

The present technology can be applied to any image coding/decoding method. That is, as long as it does not contradict the present technology described above, specifications of various processing with respect to image coding/decoding, such as transformation (inverse transformation), quantization (inverse quantization), coding (decoding), and prediction, are arbitrary and are not limited to the above-described examples. In addition, some of such processing may be omitted as long as they do not contradict the present technology described above.

Further, the present technology can be applied to a multi-viewpoint image coding/decoding system that encodes/decodes a multi-viewpoint image including images of a plurality of viewpoints (views). In that case, the present technology may be applied in coding/decoding of each viewpoint (view).

Furthermore, the present technology can be applied to a hierarchical image coding (scalable coding)/decoding system that encodes/decodes a hierarchical image that is layered (layered) so as to have a scalability function for a predetermined parameter. In that case, the present technology may be applied in coding/decoding of each layer.

Although the coding device 100, the decoding device 200, the image coding device 300, and the image decoding device 400 have been described above as application examples of the present technology, the present technology can be applied to any configuration.

For example, the present technology can be applied to various electronic apparatuses such as transmitters and receivers (e.g., television receivers and cellular phones) in satellite broadcasting, wired broadcasting such as cable TV, transmission on the Internet, transmission to terminals according to cellular communication, and the like, or devices (e.g., hard disk recorders and cameras) that record images in media such as an optical disc, a magnetic disk, and a flash memory or reproduce images from these storage media.

Furthermore, for example, the present technology can also be implemented as a part of components of a device, such as a processor (e.g., a video processor) serving as a system large scale integration (LSI) circuit or the like, a module (e.g., a video module) using a plurality of processors and the like, a unit (e.g., a video unit) using a plurality of modules and the like, or a set (e.g., a video set) of units having additional other functions.

In addition, the present technology can also be applied to, for example, a network system composed of a plurality of devices. For example, the present technology can be implemented as cloud computing in which a function is shared and processed in common by a plurality of devices via a network. For example, the present technology may also be implemented in a cloud service that provides services with respect to images (moving images) to any terminals such as a computer, an audio visual (AV) apparatus, a portable information processing terminal, an Internet of Things (IoT) device, and the like.

Meanwhile, in the present description, the system means a set of a plurality of components (devices, modules (parts), etc.), and it does not matter whether or not all the components are arranged in a single housing. Therefore, a plurality of devices housed in separate housings and connected via a network, and one device in which a plurality of modules are housed in one housing are both systems.

<Fields/applications to which present technology is applicable>

Systems, devices, processing units and the like to which the present technology is applied can be used, for example, in any field such as transportation, medical care, crime prevention, agriculture, livestock industry, mining, beauty, factories, home appliances, weather, and nature monitoring. In addition, applications thereof is arbitrary.

For example, the present technology can be applied to systems and devices for providing ornamental content and the like. Further, the present technology can also be applied to, for example, systems and devices traffic such as traffic condition supervision and automatic driving control. Furthermore, the present technology can also be applied to, for example, systems and devices for security. Further, the present technology can be applied to, for example, systems and devices used for automatic control of machines and the like. Further, the present technology can also be applied to, for example, systems and devices for agriculture and living stock industry. In addition, the present technology can also be applied to, for example, systems and devices for monitoring natural conditions such as volcanoes, forests, and oceans and wildlife. Further, the present technology can also be applied to, for example, systems and devices for sports.

<Others>

Meanwhile, in the present description, "flag" is information for identifying a plurality of states and includes not only information used to identify two states of true (1) and false (0) but also information capable of identifying three or more states. Accordingly, this "flag" can have not only two values of 1/0 but also three or more values. That is, the number of bits constituting this "flag" is arbitrary and it may be 1 bit or a plurality of bits. In addition, identification information (also including a flag) is assumed to have not only a form in which the identification information is included in a bit stream but also a form in which difference information of the identification information with respect to certain reference information is included in a bit stream, and thus "flag" and "identification information " includes only the information itself but also difference information with respect to reference information in the present description.

Furthermore, various types of information (metadata and the like) about encoded data (bit streams) may be transmitted or recorded in any form as long as they are associated with the encoded data. Here, the term "associate" means, for example, making other data available (linkable) when one piece of data is processed. That is, associated data may be collected as one piece of data or may be individual data. For example, information associated with encoded data (image) may be transmitted on a transmission path different from that for the encoded data (image). Further, for example, information associated with encoded data (image) may be recorded on a recording medium (or another recording area of the same recording medium) different from that for the encoded data (image). Meanwhile, this "association" may be for part of data, not the entire data. For example, an image and information corresponding to the image may be associated with each other in an arbitrary unit such as a plurality of frames, one frame, or a part within a frame.

Meanwhile, in the present description, the terms "compose", "multiplex", "add", "integrate", "include", "store", "put in", "introduce", "insert", and the like mean combining a plurality of things into one, for example, combining encoded data and metadata into one piece of data and means a method of the aforementioned "association".

In addition, embodiments of the present technology are not limited to the above-described embodiments, and various modifications can be made without departing from the gist of the present technology.

For example, a configuration described as one device (or one processing unit) may be divided to be configured as a plurality of devices (or processing units). Conversely, a configuration described as a plurality of devices (or processing units) in the above description may be collectively configured as one device (or one processing unit). Further, it goes without saying that components other than those described above may be added to the configuration of each device (or each processing unit). Furthermore, a part of the configuration of one device (or one processing unit) may be included in the configuration of another device (or another processing unit) as long as the configuration or operation of the entire system is substantially the same.

Further, for example, the program described above may be executed in any device. In such a case, the device may have necessary functions (functional blocks and the like) to be able to obtain necessary information.

Further, for example, respective steps of a flowchart may be executed by one device or by a plurality of devices in a shared manner. Furthermore, in a case where a plurality of kinds of processing are included in a single step, the plurality of kinds of processing may be executed by one device or by a plurality of devices in a shared manner. In other words, a plurality of kinds of processing included in a single step may be executed as processing for a plurality of steps. Conversely, processing described as a plurality of steps may be collectively executed as a single step.

In addition, for example, a program executed by a computer may be executed such that processing steps describing the program is executed in chronological order according to the order described in the present description or are executed in parallel or individually at a necessary timing such as in response to a call. That is, as long as no contradiction arises, each processing step may be executed in an order different from the order described above. Furthermore, the kinds of processing of steps describing the program may be executed in parallel with the processing of another program or may be executed in combination with the processing of the other program.

In addition, for example, a plurality of technologies with respect to the present technology can be implemented independently alone as long as no contradiction arises, for example. It goes without saying that any number of the present technologies can also be implemented in parallel. For example, part or all of the present technology described in any of the embodiments may be implemented in combination with part or all of the present technology described in the other embodiments. Further, part or all of the above-described present technology may be implemented in combination with other technologies not described above.

Meanwhile, the present technology can also take the following configurations.

(1) An image processing device including a coding unit configured to set a fixed context variable for a first bin of a bin string of secondary transform control information, which is control information about secondary transformation, and to arithmetically code each bin of the secondary transform control information with reference to the set fixed context variable.
(2) The image processing device according to (1), wherein the fixed context variable is "0".
(3) The image processing device according to (1), wherein the coding unit further sets a bypass flag for a second bin of the bin string.
(4) The image processing device according to (1), wherein the coding unit further sets, for the second bin of the bin string, a context variable which is common with the first bin.
(5) The image processing device according to (4), wherein the common context is "0".

(6) The image processing device according to (1), wherein the secondary transform control information includes a secondary transform identifier indicating a type of the secondary transformation.

(7) The image processing device according to (1), wherein the coding unit binarizes the secondary transform control information to generate the bin string and sets the fixed context variable for the first bin of the generated bin string.

(8) The image processing device according to (1), further including a coefficient transformation unit configured to perform the secondary transformation on a primary transform coefficient of a transform block corresponding to the secondary transform control information to generate a secondary transform coefficient.

(9) The image processing device according to (8), further including a quantization unit configured to quantize the secondary transform coefficient generated by the coefficient transformation unit to generate a quantization coefficient.

(10) An image processing method including setting a fixed context variable for a first bin of a bin string of secondary transform control information, which is control information about secondary transformation, and arithmetically coding each bin of the secondary transform control information with reference to the set fixed context variable.

(11) An image processing device including a decoding unit configured to perform arithmetic decoding with reference to a fixed context variable set for a first bin of a bin string of secondary transform control information, which is control information about secondary transformation.

(12) The image processing device according to (11), wherein the fixed context variable is "0".

(13) The image processing device according to (11), wherein the decoding unit further performs arithmetic decoding on the basis of a bypass flag set for a second bin of the bin string.

(14) The image processing device according to (11), wherein the decoding unit further performs arithmetic decoding with reference to a context variable which is common with the first bin, set for the second bin of the bin string.

(15) The image processing device according to (14), wherein the common context is "0".

(16) The image processing device according to (11), wherein the secondary transform control information includes a secondary transform identifier indicating a type of the secondary transformation.

(17) The image processing device according to (11), wherein the decoding unit performs multivalue conversion on the bin string obtained through arithmetic decoding to generate the secondary transform control information.

(18) The image processing device according to (11), further including an inverse coefficient transformation unit configured to perform inverse secondary transformation on a secondary transform coefficient of a transform block corresponding to the secondary transform control information to generate a primary transform coefficient.

(19) The image processing device according to (18), further including an inverse quantization unit configured to inversely quantize a quantization coefficient to generate the secondary transform coefficient, wherein the inverse coefficient transformation unit performs the inverse secondary transformation on the secondary transform coefficient generated by the inverse quantization unit to generate the primary transform coefficient.

(20) An image processing method including performing arithmetic decoding with reference to a fixed context variable set for a first bin of a bin string of secondary transform control information, which is control information about secondary transformation.

[Reference Signs List]

100 Coding device
121 Binarization unit
122 Selection unit
123 Context model
124 Arithmetic coding unit
125 Arithmetic coding unit
126 Selection unit
200 Decoding device
221 Selection unit
222 Context model
223 Arithmetic decoding unit
224 Arithmetic decoding unit
225 Selection unit
226 Multivalue conversion unit
300 Image decoding device
315 Coding unit
400 Image coding unit
412 Decoding unit

**Claims**

1. An image processing device comprising a coding unit configured to set a fixed context variable for a first bin of a bin string of secondary transform control information, which is control information about secondary transformation, and to arithmetically code each bin of the secondary transform control information with reference to the set fixed context variable.

2. The image processing device according to claim 1, wherein the fixed context variable is "0".

3. The image processing device according to claim 1, wherein the coding unit further sets a bypass flag for a second bin of the bin string.

4. The image processing device according to claim 1, wherein the coding unit further sets, for the second bin of the bin string, a context variable which is common with the first bin.

5. The image processing device according to claim 4, wherein the common context is "0".

6. The image processing device according to claim 1, wherein the secondary transform control information includes a secondary transform identifier indicating a type of the secondary transformation.

7. The image processing device according to claim 1, wherein the coding unit binarizes the secondary transform control information to generate the bin string and sets the fixed context variable for the first bin of the generated bin string.

8. The image processing device according to claim 1, further comprising a coefficient transformation unit configured to perform the secondary transformation on a primary transform coefficient of a transform block corresponding to the secondary transform control information to generate a secondary transform coefficient.

9. The image processing device according to claim 8, further comprising a quantization unit configured to quantize the secondary transform coefficient generated by the coefficient transformation unit to generate a quantization coefficient.

10. An image processing method comprising setting a fixed context variable for a first bin of a bin string of secondary transform control information, which is control information about secondary transformation, and arithmetically coding each bin of the secondary transform control information with reference to the set fixed context variable.

11. An image processing device comprising a decoding unit configured to perform arithmetic decoding with reference to a fixed context variable set for a first bin of a bin string of secondary transform control information, which is control information about secondary transformation.

12. The image processing device according to claim 11, wherein the fixed context variable is "0".

13. The image processing device according to claim 11, wherein the decoding unit further performs arithmetic decoding on the basis of a bypass flag set for a second bin of the bin string.

14. The image processing device according to claim 11, wherein the decoding unit further performs arithmetic decoding with reference to a context variable which is common with the first bin, set for the second bin of the bin string.

15. The image processing device according to claim 14, wherein the common context is "0".

16. The image processing device according to claim 11, wherein the secondary transform control information includes a secondary transform identifier indicating a type of the secondary transformation.

17. The image processing device according to claim 11, wherein the decoding unit performs multivalue conversion on the bin string obtained through arithmetic decoding to generate the secondary transform control information.

18. The image processing device according to claim 11, further comprising an inverse coefficient transformation unit configured to perform inverse secondary transformation on a secondary transform coefficient of a transform block corresponding to the secondary transform control information to generate a primary transform coefficient.

19. The image processing device according to claim 18, further comprising an inverse quantization unit configured to inversely quantize a quantization coefficient to generate the secondary transform coefficient, wherein the inverse coefficient transformation unit performs the inverse secondary transformation on the secondary transform coefficient generated by the inverse quantization unit to generate the primary transform coefficient.

20. An image processing method comprising performing arithmetic decoding with reference to a fixed context variable set for a first bin of a bin string of secondary transform control information, which is control information about secondary transformation.

Fig. 1

EP 4 013 055 A1

| lfnst_idx | TRANSFORM TYPE | binarization |
|---|---|---|
| 0 | SECONDARY TRANSFORM IS OFF | 0 |
| 1 | FIRST SECONDARY TRANSFORM | 10 |
| 2 | SECOND SECONDARY TRANSFORM | 11 |

A

| Syntax Element | Binarization | |
|---|---|---|
| | Process | Input parameters |
| lfnst_idx[ ][ ] | TR | cMax = 2, cRiceParam = 0 |

B

| syntax | 0 | 1 | 2 | 3 | 4 | 5>= |
|---|---|---|---|---|---|---|
| lfnst_idx[ ][ ] | ( tu_mts_idx[ x0 ][ y0 ] == 0 && treeType != SINGLE_TREE ) ? 1 : 0 | bypass | na | na | na | na |

C

Fig. 2

A

| METHOD | ALLOCATION OF FIXED INDEX | SHARING OF CONTEXT VARIABLE | Syntax element | binIdx | | | | | |
|---|---|---|---|---|---|---|---|---|---|
| | | | | 0 | 1 | 2 | 3 | 4 | >=5 |
| 1 | X | | lfnst_idx[][] | 0 | bypass | na | na | na | na |
| 2 | X | X | lfnst_idx[][] | 0 | 0 | na | na | na | na |

B

| METHOD | NUMBER OF CONTEXTS | NUMBER OF CONTEXT CODING BINS | NUMBER OF BYPASS CODING BINS |
|---|---|---|---|
| VTM | 2 | 1 | 1 |
| 1 | 1 | 1 | 1 |
| 2 | 1 | 2 | 0 |

Fig. 3

EP 4 013 055 A1

Fig. 4

```
        ( START CODING PROCESSING )
                    │
                    ▼
┌──────────────────────────────────────┐ S101
│ INPUT VALUE syncVal OF SYNTAX ELEMENT │
│          OF PROCESSING TARGET         │
└──────────────────────────────────────┘
                    │
                    ▼
┌──────────────────────────────────────┐ S102
│  DERIVE BIN STRING synBins OF synVal  │
│    THROUGH BINARIZATION DEFINED       │
│        FOR EACH SYNTAX ELEMENT        │
└──────────────────────────────────────┘
                    │
                    ▼
┌──────────────────────────────────────┐ S103
│       READ CONTEXT VARIABLE ctx       │
│     CORRESPONDING TO EACH BIN         │
│     POSITION (binIdx) OF BIN STRING   │
│  DEFINED FOR EACH SYNTAX ELEMENT      │
│      AND FLAG isBypass INDICATING     │
│  WHETHER BYPASS MODE HAS BEEN SET     │
└──────────────────────────────────────┘
                    │
                    ▼
        ⟨      BYPASS MODE?      ⟩ S104
                   │ NO            │ YES
                   ▼               │
┌──────────────────────────────────────┐ S105
│  CODE VALUE OF BIN AT binIdx OF BIN   │
│  STRING synBins IN CABAC REGULAR      │
│     MODE WITH REFERENCE TO            │
│  PROBABILITY STATE OF CONTEXT         │
│  VARIABLE ctx (CONTEXT CODING)        │
└──────────────────────────────────────┘
                                    │
                     ┌──────────────────────────────┐ S106
                     │        CODE VALUE             │
                     │      OF BIN AT binIdx         │
                     │  OF BIN STRING synBins IN     │
                     │   CABAC BYPASS MODE           │
                     │      (BYPASS CODING)          │
                     └──────────────────────────────┘
                    │               │
                    ▼◄──────────────┘
    NO ⟨ IS BREAK CONDITION A SATISFIED? ⟩ S107
                    │ YES
                    ▼
               (   END   )
```

Fig. 5

EP 4 013 055 A1

Fig. 6

```
        ┌─────────────────────────────┐
        │  START DECODING PROCESSING  │
        └─────────────────────────────┘
                      │
    ┌─────────────────▼───────────────────────┐
    │ ┌───────────────────────────────────┐   │ S201
    │ │       READ CONTEXT VARIABLE ctx   │   │
    │ │   CORRESPONDING TO EACH BIN POSITION
    │ │ (binIdx) OF BIN STRING DEFINED FOR EACH
    │ │   SYNTAX ELEMENT AND FLAG isBypass │
    │ │   INDICATING WHETHER BYPASS MODE   │
    │ │           HAS BEEN SET             │
    │ └───────────────────────────────────┘
    │                 │
    │        ┌────────▼─────────┐ S202
    │        │   BYPASS MODE?   ├──── YES ──┐
    │        └────────┬─────────┘           │
    │              NO │                     │
    │ ┌───────────────▼───────────────────┐ │ S203
    │ │  DECODE VALUE OF BIN AT binIdx OF BIN
    │ │ STRING synBins IN CABAC REGULAR MODE
    │ │ WITH REFERENCE TO PROBABILITY STATE │
    │ │     OF CONTEXT VARIABLE ctx         │
    │ └───────────────────────────────────┘ │
    │                                        │
    │                      ┌─────────────────▼──┐ S204
    │                      │  DECODE VALUE OF BIN AT binIdx
    │                      │ OF BIN STRING synBins IN CABAC
    │                      │        BYPASS MODE  │
    │                      └─────────────────────┘
    │                 │◄─────────────┘
    │        ┌────────▼─────────────────────┐ S205
    └─ NO ───┤  IS BREAK CONDITION A SATISFIED?
             └────────┬─────────────────────┘
                  YES │
    ┌─────────────────▼───────────────────┐ S206
    │  DERIVE VALUE synVal OF SYNTAX ELEMENT
    │ OF PROCESSING TARGET FROM BIN STRING │
    │     synBins THROUGH MULTIVALUE       │
    │  CONVERSION PROCESSING DEFINED       │
    │     FOR EACH SYNTAX ELEMENT          │
    └─────────────────┬───────────────────┘
    ┌─────────────────▼───────────────────┐ S207
    │   OUTPUT VALUE syncVal OF SYNTAX     │
    │   ELEMENT OF PROCESSING TARGET       │
    └─────────────────┬───────────────────┘
                      │
              ┌───────▼───────┐
              │      END      │
              └───────────────┘
```

Fig. 7

Fig. 8

```
          ┌────────────────────────────────────┐
          │   START IMAGE CODING PROCESSING    │
          └────────────────────────────────────┘
                         │
                         │  S301
          ┌────────────────────────────────────┐
          │       PERFORM REARRANGEMENT        │
          └────────────────────────────────────┘
                         │
                         │  S302
          ┌────────────────────────────────────┐
          │        SET PROCESSING UNIT         │
          └────────────────────────────────────┘
                         │
                         │  S303
          ┌────────────────────────────────────┐
          │    DETERMINE CODING PARAMETERS     │
          └────────────────────────────────────┘
                         │
                         │  S304
          ┌────────────────────────────────────┐
          │    PERFORM PREDICTION PROCESSING   │
          └────────────────────────────────────┘
                         │
                         │  S305
          ┌────────────────────────────────────┐
          │   CALCULATE RESIDUAL BETWEEN       │
          │   IMAGE AND PREDICTED IMAGE        │
          └────────────────────────────────────┘
                         │
                         │  S306
          ┌────────────────────────────────────┐
          │   PERFORM ORTHOGONAL TRANSFORM     │
          └────────────────────────────────────┘
                         │
                         │  S307
          ┌────────────────────────────────────┐
          │       PERFORM QUANTIZATION         │
          └────────────────────────────────────┘
```

S308 — PERFORM INVERSE QUANTIZATION

S309 — PERFORM INVERSE ORTHOGONAL TRANSFORM

S310 — ADD TO PREDICTED IMAGE

S311 — PERFORM IN-LOOP FILTER PROCESSING

S312 — STORE

S313 — PERFORM CODING PROCESSING

S314 — ACCUMULATE AND OUTPUT

END

Fig. 9

Fig. 10

```
        ┌─────────────────────────────┐
        │      START IMAGE             │
        │   DECODING PROCESSING        │
        └──────────────┬──────────────┘
                       │
        ┌──────────────▼──────────────┐
        │     ACCUMULATE IMAGES        │  S401
        └──────────────┬──────────────┘
                       │
        ┌──────────────▼──────────────┐
        │  PERFORM DECODING PROCESSING │  S402
        └──────────────┬──────────────┘
                       │
        ┌──────────────▼──────────────┐
        │  PERFORM INVERSE QUANTIZATION│  S403
        └──────────────┬──────────────┘
                       │
        ┌──────────────▼──────────────┐
        │  PERFORM INVERSE ORTHOGONAL  │  S404
        │         TRANSFORM            │
        └──────────────┬──────────────┘
                       │
        ┌──────────────▼──────────────┐
        │   GENERATE PREDICTED IMAGE   │  S405
        └──────────────┬──────────────┘
                       │
        ┌──────────────▼──────────────┐
        │     ADD TO PREDICTED IMAGE   │  S406
        └──────────────┬──────────────┘
                       │
        ┌──────────────▼──────────────┐
        │ PERFORM IN-LOOP FILTER       │  S407
        │         PROCESSING           │
        └──────────────┬──────────────┘
                       │
        ┌──────────────▼──────────────┐
        │    PERFORM REARRANGEMENT     │  S408
        └──────────────┬──────────────┘
                       │
        ┌──────────────▼──────────────┐
        │           STORE              │  S409
        └──────────────┬──────────────┘
                       │
                 ┌─────▼─────┐
                 │    END    │
                 └───────────┘
```

Fig. 11

EP 4 013 055 A1

## INTERNATIONAL SEARCH REPORT

| International application No. |
| --- |
| PCT/JP2020/033572 |

**A. CLASSIFICATION OF SUBJECT MATTER**
H04N 19/13(2014.01)i
FI: H04N19/13

According to International Patent Classification (IPC) or to both national classification and IPC

**B. FIELDS SEARCHED**

Minimum documentation searched (classification system followed by classification symbols)
H04N19/00-19/98

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | NALCI, Alican et al., "Non-CE6: An Improved Context Modeling for LFNST", Joint Video Experts Team (JVET) of ITU-T SG 16 WP 3 and ISO/IEC JTC 1/SC 29/WG 11, JVET-O0373-v1, 15th Meeting: Gothenburg, SE, July 2019, pp.1-3 1 Introduction, 2 Proposed method | 1-20 |
| A | BROSS, Benjamin, CHEN, Jianle and LIU, Shan, "Versatile Video Coding (Draft 6)", Joint Video Experts Team (JVET) of ITU-T SG 16 WP 3 and ISO/IEC JTC 1/SC 29/WG 11, JVET-O2001 (version 14), 15th Meeting: Gothenburg, SE, July 2019, pp. 384-388 table 9-82 Assignment of ctxlnc to syntax elements with context coded bins | 1-20 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 November 2020 (02.11.2020) | 17 November 2020 (17.11.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/033572 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | TSUKUBA, Takeshi et al., "Non-CE6: Context modeling for MTS index coding", Joint Video Experts Team (JVET) of ITU-T SG 16 WP 3 and ISO/IEC JTC 1/SC 29/WG 11, JVET-O0354-v2, 15th Meeting: Gothenburg, SE, July 2019, pp. 1-4 1 Introduction, 2 Proposal | 1-20 |
| P, X | TSUKUBA, Takeshi et al., "Non-CE6: Context modeling for LFNST index coding", Joint Video Experts Team (JVET) of ITU-T SG 16 WP 3 and ISO/IEC JTC 1/SC 29/ WG 11, JVET-P0271-v1, 16th Meeting: Geneva, CH, September 2019, pp. 1-5 1 Introduction, 2 Proposal | 1-20 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BENJAMIN BROSS ; JIANLE CHEN ; SHAN LIU.** Versatile Video Coding (Draft 6). *JVET-O2001-vE, m49908, Joint Video Experts Team (JVET) of ITU-T SG 16 WP 3 and ISO/IEC JTC 1/SC 29/WG 11 15th Meeting: Gothenburg, SE,* 03 July 2019

- **JIANLE CHEN ; YAN YE ; SEUNG HWAN KIM.** Algorithm description for Versatile Video Coding and Test Model 6 (VTM 6). *JVET-O2002-v2, m49914, Joint Video Experts Team (JVET) of ITU-T SG 16 WP 3 and ISO/IEC JTC 1/SC 29/WG 11 15th Meeting: Gothenburg, SE,* 03 July 2019
- Advanced video coding for generic audiovisual services. *ITU-T H.264,* April 2017
- High efficiency video coding. *ITU-T H.265,* February 2018